# EUROPEAN PATENT SPECIFICATION

(11) **EP 4 442 653 B1**
(45) Date of publication and mention of the grant of the patent: **01.04.2026**
(21) Application number: 22898184.1
(22) Date of filing: 18.08.2022
(51) Int. Cl.: C02F 3/30, C02F 1/66, C02F 3/00, C02F 11/04, C02F 11/127, C02F 11/12, C02F 101/16

(54) **BIOLOGICAL TREATMENT METHOD AND BIOLOGICAL TREATMENT SYSTEM**
BIOLOGISCHES BEHANDLUNGSVERFAHREN UND BIOLOGISCHES BEHANDLUNGSSYSTEM
PROCÉDÉ ET SYSTÈME DE TRAITEMENT BIOLOGIQUE

(30) Priority: 29.11.2021 JP 2021193237
(43) Date of publication of application: 09.10.2024
(73) Proprietor: Metawater Co., Ltd., Tokyo 101-0041 (JP); The University of Kitakyushu, Kitakyushu-shi, Fukuoka 802-8577 (JP)
(72) Inventor: YANASE, Tetsuya, Tokyo 101-0041 (JP); YASUI, Hidenari, Kitakyushu-shi, Fukuoka 808-0135 (JP); TERASHIMA, Mitsuharu, Kitakyushu-shi, Fukuoka 808-0135 (JP)
(74) Representative: FDST Patentanwälte
(86) International application number: PCT/JP2022/031278
(87) International publication number: WO 2023/095399

(56) References cited:
- WO-A1-2020/237283
- JP-A- 2009 220 020
- JP-A- 2010 094 665
- JP-A- 2011 189 249
- JP-A- 2018 118 209
- US-A1- 2021 147 270

## Description

### TECHNICAL FIELD

The present invention relates to a biological treatment method and a biological treatment system.

### BACKGROUND ART

In a treatment system (hereinafter also referred to as a "biological treatment system") for treating organic wastewater (hereinafter also simply referred to as "wastewater") such as sewage, for example, an activated sludge method, in which organic matter is decomposed by microorganisms (hereinafter also referred to as "activated sludge") bred in a reaction tank, is used as a method for removing pollutants and the like (hereinafter also simply referred to as "pollutants") contained in the organic wastewater. Examples of the pollutants include organic matter and suspended matter (see Patent Literature 1).

### CITATION LIST

### PATENT LITERATURE

Patent Literature 1: Japanese Patent Application Publication No. 2021-079335
Patent Literature 2: International Patent Application Publication WO 2020/237283 A1
Patent Literature 3: US Patent Application Publication US 2021/147270 A1
Patent Literature 4: Japanese Patent Application Publication JP 2011 189249 A
Patent Literature 5: Japanese Patent Application Publication JP 2018 118209 A
Patent Literature 6: Japanese Patent Application Publication JP 2010 094665 A
Patent Literature 7: Japanese Patent Application Publication JP 2009 220020 A

### SUMMARY OF INVENTION

### PROBLEMS TO BE SOLVED BY THE INVENTION

In biological treatment systems such as the above-described system, it is desired to reduce running costs such as the aeration cost (amount of oxygen) required for denitrification of nitrogen components contained in organic wastewater.

The present invention is defined in the appended method claim 1 and system claim 3, a preferred embodiment of the method is provided in claim 2.

### ADVANTAGEOUS EFFECTS OF THE INVENTION

According to one aspect, it is possible to reduce running costs.

### BRIEF DESCRIPTION OF DRAWINGS

- FIG. 1: illustrates the biological treatment system 800 in the first comparative example.
- FIG. 2: illustrates the biological treatment system 900 in the second comparative example.
- FIG. 3: is a diagram illustrating the configuration of the biological treatment system 100 according to the first embodiment.
- FIG. 4: is a diagram illustrating the configuration of a partial nitrification treatment system 20 in the first embodiment.
- FIG. 5: is a diagram illustrating the configuration of an activated sludge process with reduced nitrite-oxidizing bacterial biomass 80 in the first embodiment.
- FIG. 6: is a diagram illustrating the configuration of an anammox process 30 in the first embodiment.
- FIG. 7: is a diagram illustrating the configuration of a methane fermentation process 40 in the first embodiment.
- FIG. 8: is a diagram illustrating the configuration of a partial nitrification treatment system 60 in the first embodiment.
- FIG. 9: is a diagram illustrating the configuration of an anammox process 70 in the first embodiment.
- FIG. 10: is a graph representing experiment examples of the biological treatment system 100.
- FIG. 11: is a graph representing experiment examples of the biological treatment system 100.
- FIG. 12: is a graph representing experiment examples of the biological treatment system 100.
- FIG. 13: is a diagram illustrating the configuration of a partial nitrification treatment system 20 according to a variation of the first embodiment.

### DESCRIPTION OF EMBODIMENTS

### [Biological Treatment System 800 in First Comparative non-claimed Example]

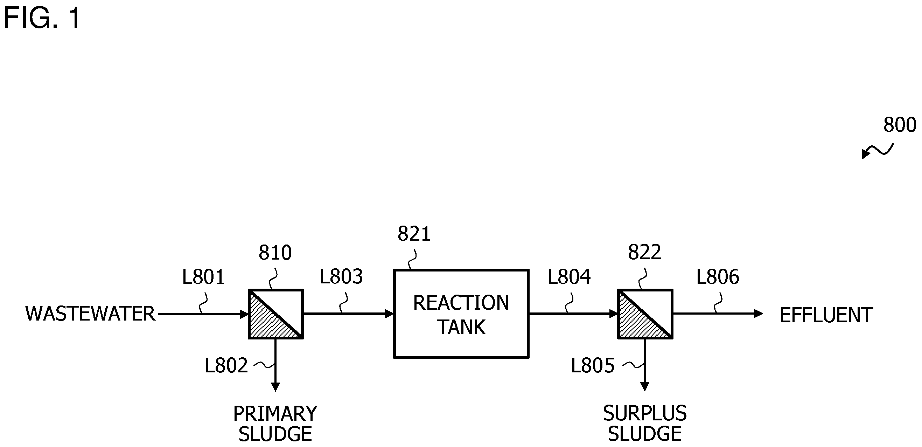

First, the following describes a biological treatment system 800 in a first comparative example. FIG. 1 illustrates the biological treatment system 800 in the first comparative example.

The biological treatment system 800 uses the activated sludge method to treat pollutants contained in wastewater (organic wastewater). Specifically, as illustrated in FIG. 1, the biological treatment system 800 includes a solid-liquid separation tank 810, a reaction tank 821, and a solid-liquid separation tank 822, for example.

The solid-liquid separation tank 810 separates pollutants (e.g., solid organic matter) contained in wastewater discharged via a line L801, for example. The line L801 is a pipe connecting the source of wastewater such as a sewer and the solid-liquid separation tank 810, for example. The solid-liquid separation tank 810 discharges the separated pollutants as primary sludge through a line L802 to a concentrator (not shown), and discharges the wastewater from which the pollutants have been separated, through a line L803 to the reaction tank 821, for example. The line L802 is a pipe connecting the solid-liquid separation tank 810 and the concentrator, for example. The line L803 is a pipe connecting the solid-liquid separation tank 810 and the reaction tank 821, for example.

In the reaction tank 821, biological treatment is performed on the wastewater discharged from the solid-liquid separation tank 810 via the line L803 with use of activated sludge (not shown), for example. The activated sludge contains, for example, aerobic bacteria such as ammonia-oxidizing bacteria and nitrite-oxidizing bacteria, and facultative anaerobic bacteria such as denitrification bacteria.

Specifically, in the reaction tank 821, two-step nitrification is performed in which ammonia contained in the wastewater is oxidized (nitrified) to nitrite by ammonia-oxidizing bacteria, and the nitrite generated through the oxidation by the ammonia-oxidizing bacteria is further oxidized (nitrified) to nitrate by nitrite-oxidizing bacteria, for example. In the reaction tank 821, denitrification of nitrogen components contained in the wastewater is performed by denitrification bacteria that utilize organic matter, with use of the nitrate as an oxygen source, for example.

Thereafter, the reaction tank 821 discharges the wastewater subjected to the biological treatment through a line L804 to the solid-liquid separation tank 822, for example. The line L804 is a pipe connecting the reaction tank 821 and the solid-liquid separation tank 822, for example.

The solid-liquid separation tank 822 separates activated sludge contained in the wastewater discharged from the reaction tank 821 via the line L804, for example. The solid-liquid separation tank 822 supplies a portion of the separated activated sludge as surplus sludge through a line L805 to a concentrator (not shown), and returns the activated sludge other than the surplus sludge as return sludge through a return line (not shown) to the reaction tank 821, for example. The line L805 is a pipe connecting the solid-liquid separation tank 822 and the concentrator, for example.

Specifically, a portion of the activated sludge withdrawn from the solid-liquid separation tank 822 by a withdrawal pump (not shown) is supplied as the surplus sludge to the concentrator, and the activated sludge other than the surplus sludge is returned as the return sludge to the reaction tank 821, for example.

In addition, the solid-liquid separation tank 822 discharges the wastewater (effluent) from which the activated sludge has been separated, through a line L806 to a downstream inactivation device (not shown), for example. The inactivation device then sterilizes the wastewater discharged from the solid-liquid separation tank 822 via the line L806, and releases the inactivated effluent, for example. The line L806 is a pipe connecting the solid-liquid separation tank 822 and the inactivation device, for example.

### [Biological Treatment System 900 in Second Comparative non-claimed Example]

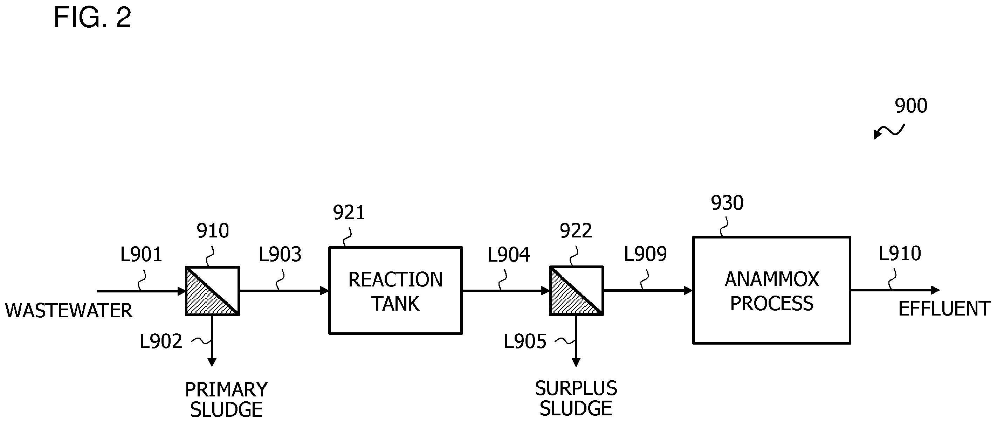

Next, the following describes a biological treatment system 900 in a second comparative example. FIG. 2 illustrates the biological treatment system 900 in the second comparative example. In the biological treatment system 900 illustrated in FIG. 2, denitrification of nitrogen components contained in wastewater is performed by so-called partial nitrification treatment and anammox treatment.

As illustrated in FIG. 2, the biological treatment system 900 includes a solid-liquid separation tank 910, a reaction tank 921, a solid-liquid separation tank 922, and an anammox process 930, for example.

Similarly to the solid-liquid separation tank 810 described with reference to FIG. 1, the solid-liquid separation tank 910 separates pollutants contained in wastewater discharged via a line L901, for example. The line L901 is a pipe connecting the source of wastewater such as a sewer and the solid-liquid separation tank 910, for example. Similarly to the solid-liquid separation tank 810 described with reference to FIG. 1, the solid-liquid separation tank 910 discharges the separated pollutants as primary sludge through a line L902 to a concentrator (not shown), and discharges the wastewater from which the pollutants have been separated, through a line L903 to the reaction tank 921, for example. The line L902 is a pipe connecting the solid-liquid separation tank 910 and the concentrator, for example. The line L903 is a pipe connecting the solid-liquid separation tank 910 and the reaction tank 921, for example.

In the reaction tank 921, biological treatment is performed on the wastewater discharged from the solid-liquid separation tank 910 via the line L903 with use of activated sludge (not shown), for example. In this biological treatment, nitrification is controlled to prevent the growth of nitrite-oxidizing bacteria (so-called partial nitrification).

Thereafter, the reaction tank 921 discharges the wastewater subjected to the biological treatment through a line L904 to the solid-liquid separation tank 922, for example. The line L904 is a pipe connecting the reaction tank 921 and the solid-liquid separation tank 922, for example.

Similarly to the solid-liquid separation tank 822 described with reference to FIG. 1, the solid-liquid separation tank 922 separates activated sludge contained in the wastewater discharged from the reaction tank 921 via the line L904, for example. The solid-liquid separation tank 922 supplies a portion of the separated activated sludge as surplus sludge through a line L905 to a concentrator (not shown), and returns the activated sludge other than the surplus sludge as return sludge through a return line (not shown) to the reaction tank 921, for example. The line L905 is a pipe connecting the solid-liquid separation tank 922 and the concentrator, for example.

In addition, the solid-liquid separation tank 922 supplies the wastewater (effluent) from which the activated sludge has been separated, through a line L909 to the anammox process 930, for example. The line L909 is a pipe connecting the solid-liquid separation tank 922 and the anammox process 930, for example.

The anammox process 930 performs anammox treatment in which nitrogen components are denitrified directly by anammox bacteria, from nitrite supplied from the solid-liquid separation tank 922 via the line L909 and ammonia contained in the wastewater, for example.

In addition, the anammox process 930 discharges the wastewater (effluent) subjected to the anammox treatment through a line L910 to a downstream inactivation device (not shown), for example. The inactivation device then sterilizes the wastewater discharged from the anammox process 930 via the line L910, and releases the inactivated effluent, for example. The line L910 is a pipe connecting the anammox process 930 and the inactivation device, for example.

With this configuration, the biological treatment system 900 can significantly reduce the amount of oxygen (aeration cost) required for denitrification of nitrogen components contained in wastewater, when compared with the biological treatment system 800, for example.

Here, the biological treatment system 900 described above may include an inactivation tank (not shown) for inactivating nitrite-oxidizing bacteria contained in the activated sludge with the toxicity of nitrite, for example, to inhibit the growth of nitrite-oxidizing bacteria in the reaction tank 921.

Specifically, nitrite-oxidizing bacteria contained in the activated sludge withdrawn from the reaction tank 921 by a withdrawal pump (not shown) are inactivated in the inactivation tank, for example.

More specifically, the nitrite-oxidizing bacteria are inactivated in the inactivation tank by exposing the activated sludge supplied from the reaction tank 921 to nitrite with a high concentration (e.g., about 1000 mgN/L of nitrite). The inactivation tank returns the activated sludge subjected to the inactivation of the nitrite-oxidizing bacteria to the reaction tank 921.

With this configuration, it is possible to produce nitrite from ammonia contained in the wastewater and suppress oxidation of the produced nitrite to nitrate in the reaction tank 921.

Here, the activated sludge contains many types of nitrite-oxidizing bacteria, and the nitrite-oxidizing bacteria differ from each other in their sensitivity to toxicity. Accordingly, when the biological treatment system 900 is operated for a long period of time, the biota of the nitrite-oxidizing bacteria may change, and toxicity-resistant species (hereinafter also referred to as "resistant bacteria") may increase. In particular, wastewater such as sewage, which contains various bacteria, generally tends to be a source of seeds for resistant bacteria. As a result, nitrite is gradually oxidized to nitrate in the reaction tank 921, making it difficult to stably obtain nitrite.

In order to stably obtain nitrite in the reaction tank 921, the nitrite concentration in the inactivation tank in the biological treatment system 900 needs to be increased to a level (e.g., about 1000 mgN/L) at which the increase of resistant bacteria can be suppressed.

However, the concentration of nitrogen components in wastewater such as sewage is generally about 20 to 40 mgN/L. Therefore, when nitrite produced from nitrogen components contained in the wastewater is used in the inactivation tank, the biological treatment system 900 cannot sufficiently sterilize the nitrite-oxidizing bacteria contained in the activated sludge.

Nitrogen (ammonium nitrogen) that can be obtained with the highest concentration at a sewage treatment plant is nitrogen contained in a separation liquid discharged from a methane fermentation process of primary sludge and surplus sludge. The nitrogen component concentration in this separation liquid is about 2000 mgN/L, for example. Therefore, it is conceivable to use a method for inactivating the nitrite-oxidizing bacteria contained in the activated sludge with about 2000 mgN/L of ammonium nitrite (i.e., about 1000 mgN/L of nitrite) by using nitrite produced from a methane fermentation system in the inactivation tank of the biological treatment system 900, for example. However, when the nitrite-oxidizing bacteria contained in the activated sludge are inactivated with a mixture of the ammonium nitrite and the activated sludge, the ammonium nitrite is diluted with the activated sludge, and therefore, the nitrite concentration after the mixing is lower than the nitrite concentration before the mixing, and it is difficult to sterilize the nitrite-oxidizing bacteria as desired.

On the other hand, if the reaction time of partial nitrification is increased to some extent, it is possible to obtain an effluent having a slightly higher nitrite ratio (e.g., the ratio between ammonium nitrogen and nitrite nitrogen is 900:1100). However, nitrite is strongly acidic, and therefore, even a slightly higher nitrite ratio significantly reduces the pH of the liquid. Since the reaction rate of ammonia-oxidizing bacteria is almost zero when the pH is about 4.4, it is difficult to obtain an ammonium nitrite liquid having a significantly increased nitrite ratio.

In addition, when inactivation is carried out using nitrite having a high concentration as described above, not only the nitrite-oxidizing bacteria contained in the activated sludge but also the ammonia-oxidizing bacteria contained in the activated sludge may be inactivated in the inactivation tank. Consequently, partial nitrification treatment may not be performed in the reaction tank 921.

Therefore, in a biological treatment system 100 according to a first embodiment of the present invention, the nitrite-oxidizing bacteria contained in the activated sludge are inactivated in an inactivation tank while the ammonia-oxidizing bacteria contained in the activated sludge are maintained. The following describes the configuration of the biological treatment system 100 according to the first embodiment.

### [Configuration of Biological Treatment System 100 in First Embodiment]

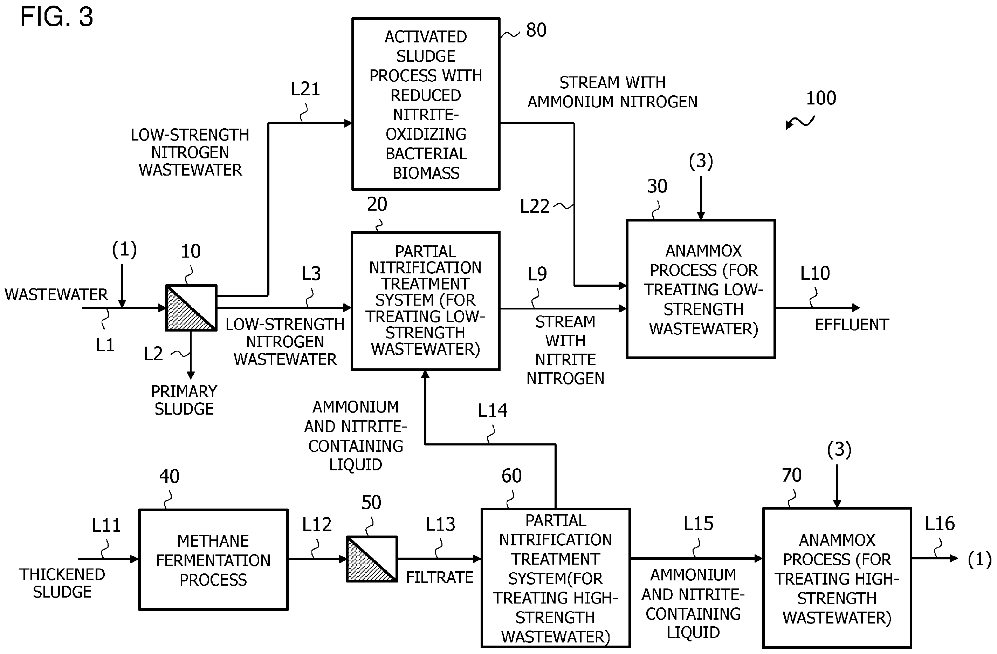

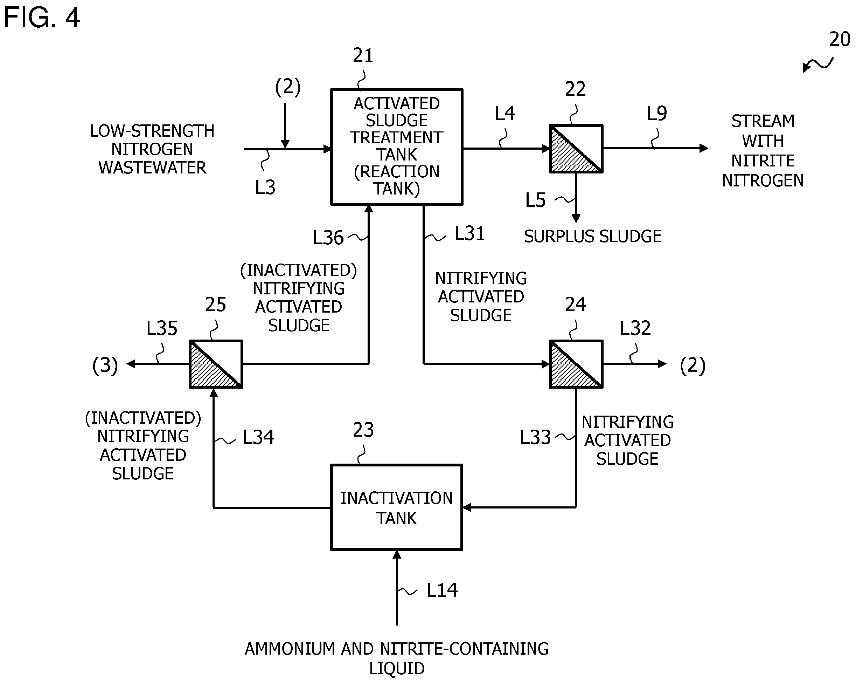

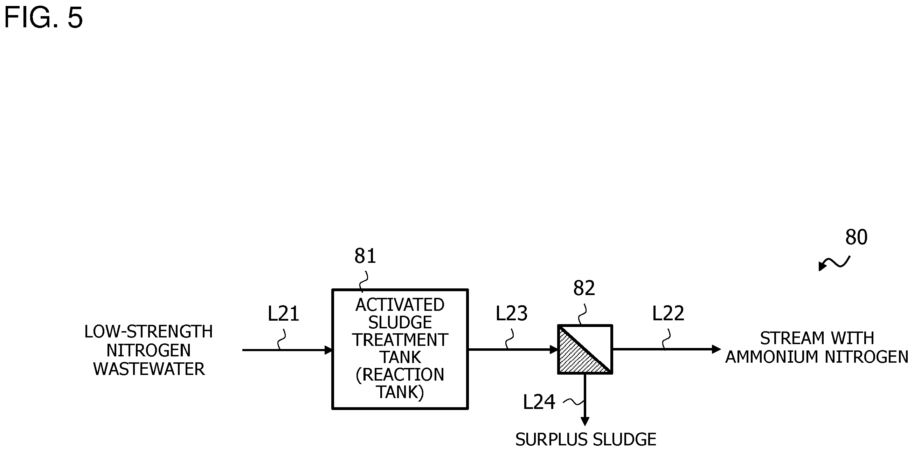

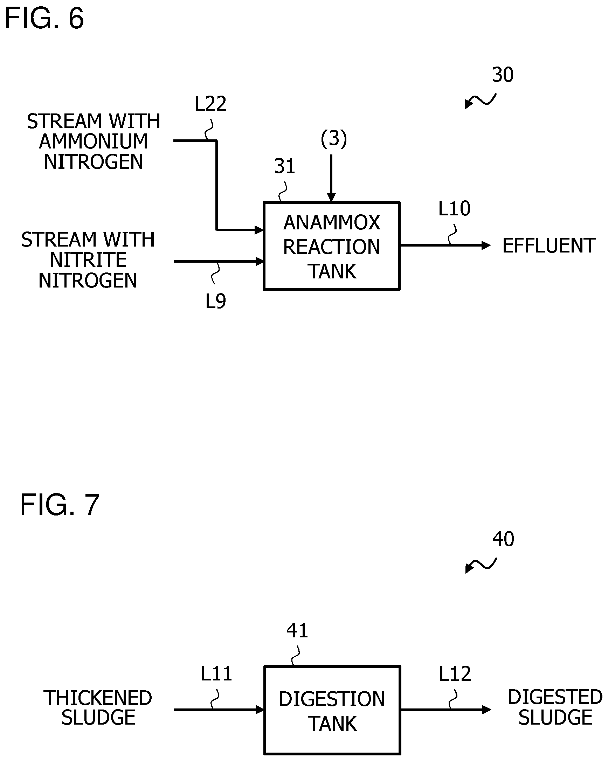

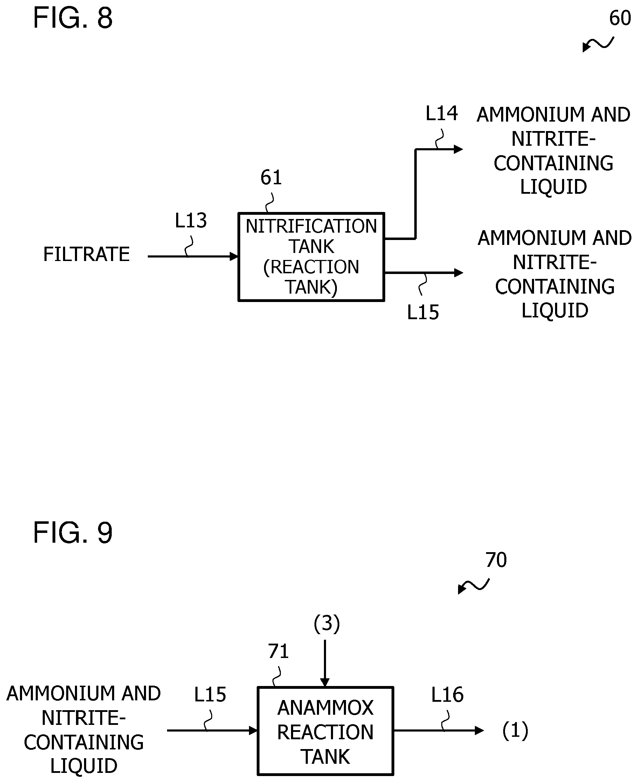

FIG. 3 is a diagram illustrating the configuration of the biological treatment system 100 according to the first embodiment. FIG. 4 is a diagram illustrating the configuration of a partial nitrification treatment system 20 in the first embodiment, and FIG. 5 is a diagram illustrating the configuration of an activated sludge process with reduced nitrite-oxidizing bacterial biomass 80 (in other words, a "nitrification-suppressing activated sludge system") in the first embodiment. FIG. 6 is a diagram illustrating the configuration of an anammox process 30 (in other words, an "anammox treatment system") in the first embodiment, and FIG. 7 is a diagram illustrating the configuration of a methane fermentation process 40 (in other words, a "methane fermentation system") in the first embodiment. FIG. 8 is a diagram illustrating the configuration of a partial nitrification treatment system 60 in the first embodiment, and FIG. 9 is a diagram illustrating the configuration of an anammox process 70 (in other words, an "anammox treatment system") in the first embodiment.

As illustrated in FIG. 3, the biological treatment system 100 includes a solid-liquid separation tank 10, the partial nitrification treatment system 20, the anammox process 30, the methane fermentation process 40, a dehydrator 50 (hereinafter also referred to as a "fourth solid-liquid separation device"), the partial nitrification treatment system 60, the anammox process 70, and the activated sludge process with reduced nitrite-oxidizing bacterial biomass 80.

First, the following describes the solid-liquid separation tank 10. Similarly to the solid-liquid separation tank 910 described with reference to FIG. 2, for example, the solid-liquid separation tank 10 separates pollutants contained in wastewater discharged via a line L1, for example. The line L1 is a pipe connecting the source of wastewater such as a sewer and the solid-liquid separation tank 10. Similarly to the solid-liquid separation tank 910 described with reference to FIG. 2, for example, the solid-liquid separation tank 10 discharges the separated pollutants as primary sludge through a line L2 to a concentrator (not shown), and discharges the wastewater from which the pollutants have been separated, through a line L3 to the partial nitrification treatment system 20. The line L2 is a pipe connecting the solid-liquid separation tank 10 and the concentrator, for example. The line L3 is a pipe connecting the solid-liquid separation tank 10 and the partial nitrification treatment system 20.

Note that the wastewater supplied from the solid-liquid separation tank 10 to the partial nitrification treatment system 20 is the wastewater from which the primary sludge has been separated, and accordingly, has a low-strength nitrogen.

Next, the following describes the partial nitrification treatment system 20. As illustrated in FIG. 4, the partial nitrification treatment system 20 includes an activated sludge treatment tank 21 (in other words, an "activated sludge process") (hereinafter also referred to as a "first reaction tank 21" or, simply as the "reaction tank 21"), a solid-liquid separation tank 22 (hereinafter also referred to as a "third solid-liquid separation device"), an inactivation tank 23 (in other words, an "inactivation process for nitrite-oxidizing bacteria"), a concentrator 24 (hereinafter also referred to as a "first solid-liquid separation device 24"), and a concentrator 25 (hereinafter also referred to as a "second solid-liquid separation device 25").

In the reaction tank 21, biological treatment is performed on the wastewater discharged from the solid-liquid separation tank 10 via the line L3 with use of activated sludge.

Note that the wastewater treated in the reaction tank 21 is the wastewater having a low-strength nitrogen. Therefore, the partial nitrification treatment system 20 will be also referred to as the "partial nitrification treatment system (for treating low-strength wastewater) 20". Also, the activated sludge after the biological treatment is performed in the reaction tank 21 will be also referred to as "nitrifying activated sludge".

The reaction tank 21 discharges the wastewater subjected to the biological treatment through a line L4 to the solid-liquid separation tank 22. The line L4 is a pipe connecting the reaction tank 21 and the solid-liquid separation tank 22.

Here, a retention time (average retention time) of the activated sludge in the reaction tank 21 in the first embodiment is preferably no longer than 15 days, for example, as described later. Namely, it is preferable to discharge the activated sludge (wastewater containing the activated sludge) from the reaction tank 21 to the solid-liquid separation tank 22 so that the retention time (average reaction time) of the activated sludge in the reaction tank 21 is no longer than 15 days.

As in the case described with reference to FIG. 2, the solid-liquid separation tank 22 separates the activated sludge contained in the wastewater discharged from the reaction tank 21 via the line L4. The solid-liquid separation tank 22 supplies a portion of the separated activated sludge as surplus sludge through a line L5 to a concentrator (not shown), and returns the activated sludge other than the surplus sludge as return sludge through a return line (not shown) to the reaction tank 21, for example. The line L5 is a pipe connecting the solid-liquid separation tank 22 and the concentrator, for example. In addition, the solid-liquid separation tank 22 supplies the wastewater (effluent) from which the activated sludge has been separated, through a Line L9 to the anammox process 30 as illustrated in FIG. 3. The line L9 is a pipe connecting the solid-liquid separation tank 22 and the anammox process 30.

The concentrator 24 illustrated in FIG. 4 separates activated sludge withdrawn from the reaction tank 21 by a withdrawal pump (not shown) into solid matter and filtrate (in other words, a "separation liquid"), for example. Specifically, activated sludge supplied from the reaction tank 21 via a line L31 is subjected to centrifugal concentration in the concentrator 24, for example. The line L31 is a pipe connecting the reaction tank 21 and the concentrator 24**.** The concentrator 24 then supplies the filtrate through a line L32 to the reaction tank 21, and supplies the activated sludge (solid matter) from which the filtrate has been separated, through a Line L33 to the inactivation tank 23**.** The line L32 is a pipe connecting the concentrator 24 and the reaction tank 21**.** The line L33 is a pipe connecting the concentrator 24 and the inactivation tank 23**.**

Namely, the concentrator 24 supplies the thickened activated sludge to the inactivation tank 23, and therefore, it is possible to prevent the nitrite concentration in the inactivation tank 23 from being reduced by the activated sludge, and to downsize the inactivation tank 23.

Subsequently, nitrite-oxidizing bacteria contained in the activated sludge supplied from the concentrator 24 via the line L33 are inactivated with nitrite in the inactivation tank 23**.**

Specifically, the nitrite-oxidizing bacteria are inactivated in the inactivation tank 23 by exposing the activated sludge supplied from the concentrator 24 via the line L33 to nitrite with a high concentration, for example. Here, the nitrite with a high concentration is nitrite having a nitrite nitrogen concentration of 250 mgN/L or more, and preferably about 1000 mgN/L, for example.

Here, the inventors found that if the hydrogen ion concentration index (hereinafter also referred to as "pH") in the inactivation tank 23 is alkaline, not only the nitrite-oxidizing bacteria contained in the activated sludge, but also ammonia-oxidizing bacteria contained in the activated sludge are killed. In addition, the inventors found that if the pH in the inactivation tank 23 is approximately neutral or lower, it is possible to kill the nitrite-oxidizing bacteria contained in the activated sludge while maintaining the ammonia-oxidizing bacteria contained in the activated sludge.

Therefore, an administrator of the biological treatment system 100 (hereinafter also simply referred to as the "administrator") performs adjustment to keep the pH in the inactivation tank 23 at an approximately neutral level or lower (specifically, pH 7.8 or lower, for example), and more specifically, keep the pH at the neutral level or lower. In addition, in order to prevent a reduction in the reaction rate of the ammonia-oxidizing bacteria in the inactivation tank 23, the administrator preferably adjusts the pH in the inactivation tank 23 to 5.0 or higher and 6.0 or lower, for example, as described later. When reducing the pH in the inactivation tank 23, it is preferable to add inorganic acid such as dilute sulfuric acid to the inactivation tank 23, for example, as described later.

With this configuration, the biological treatment system 100 according to the present embodiment can kill the nitrite-oxidizing bacteria contained in the activated sludge while maintaining the ammonia-oxidizing bacteria contained in the activated sludge. Therefore, in the biological treatment system 100, it is possible to perform partial nitrification treatment in the reaction tank 21, and perform anammox treatment in an anammox reaction tank 31. Therefore, the biological treatment system 100 can significantly reduce the amount of oxygen (aeration cost) required for denitrification of nitrogen components contained in wastewater.

Note that an inactivation time of the nitrite-oxidizing bacteria in the inactivation tank 23 is preferably no longer than 30 days, for example, as described below. Also, the inactivation time of the nitrite-oxidizing bacteria in the inactivation tank 23 is preferably 5 days or longer, for example, as described below.

Also, it is preferable to slightly perform aeration in the inactivation tank 23 to make microaerobic conditions, for example, as described below. Specifically, the activated sludge flowing into the inactivation tank 23 also contains denitrification bacteria, and therefore, it is preferable to supply an amount of oxygen large enough to suppress denitrification reaction by the denitrification bacteria (i.e., decomposition of nitrite). For example, the amount of oxygen supplied to the inactivation tank 23 per unit time is set to be less than the amount of oxygen supplied to the reaction tank 21 per unit time. Specifically, aeration is slightly performed in such a manner that a measurement device that measures DO (Dissolved Oxygen concentration) in the inactivation tank 23 can detect dissolved oxygen. Preferably, aeration is performed in such a manner that DO is 0.5 mg/L or more and 1.0 mg/L or less.

Also, the amount of sludge fed to the inactivation tank 23 per day is preferably 5% or more of the amount of activated sludge retained in the reaction tank 21 as described later, for example.

Referring back to FIG. 4, the concentrator 25 separates the activated sludge (inactivated sludge) withdrawn from the inactivation tank 23 by a withdrawal pump (not shown) into solid matter and filtrate, for example. Specifically, the activated sludge supplied from the inactivation tank 23 via a line L34 is subjected to centrifugal concentration in the concentrator 25, for example. The line L34 is a pipe connecting the inactivation tank 23 and the concentrator 25.

The concentrator 25 supplies the filtrate through a line L35 to at least one of the anammox process 30 and the anammox process 70 as illustrated in FIG. 3, and supplies the activated sludge (solid matter) from which the filtrate has been separated, through a line L36 to the reaction tank 21 as illustrated in FIG. 4, for example. The line L35 is a pipe connecting the concentrator 25 and at least one of the anammox process 30 and the anammox process 70, for example. The line L36 is a pipe connecting the concentrator 25 and the reaction tank 21**.**

Namely, the concentrator 25 supplies the activated sludge (solid matter) from which the filtrate has been separated to the reaction tank 21, and therefore, it is possible to prevent ammonium nitrite, which was used as an inactivation liquid in the inactivation tank 23, from flowing into the reaction tank 21. Accordingly, the biological treatment system 100 can suppress the generation of unnecessary aeration cost in the reaction tank 21 (aeration cost required for aeration of ammonia flowing from the inactivation tank 23).

As described above, in the partial nitrification treatment system 20 in the present embodiment, nitrite-oxidizing bacteria contained in the activated sludge are killed while ammonia-oxidizing bacteria contained in the activated sludge are maintained by keeping the pH in the inactivation tank 23 at an approximately neutral level or lower.

Therefore, in the biological treatment system 100 according to the present embodiment, it is possible to oxidize ammonia contained in wastewater to nitrite while suppressing further oxidation of the nitrite (oxidation to nitrate) in the reaction tank 21.

Next, the following describes the activated sludge process with reduced nitrite-oxidizing bacterial biomass 80 illustrated in FIG. 3. As illustrated in FIG. 5, the activated sludge process with reduced nitrite-oxidizing bacterial biomass 80 includes an activated sludge reaction tank 81 (hereinafter also referred to as a "third reaction tank 81" or simply as a "reaction tank 81") and a solid-liquid separation tank 82.

In the reaction tank 81, biological treatment is performed on wastewater discharged from the solid-liquid separation tank 10 via a line L21 as illustrated in FIG. 3 with use of activated sludge (not shown). The line L21 is a pipe connecting the solid-liquid separation tank 10 and the reaction tank 81.

Note that the wastewater supplied to the reaction tank 81 is the wastewater from which primary sludge has been separated in the solid-liquid separation tank 10. Therefore, the wastewater supplied to the reaction tank 81 is wastewater having a low-strength nitrogen, similarly to the wastewater supplied to the reaction tank 21. In the reaction tank 81, the biological treatment may also be performed on wastewater discharged from a solid-liquid separation tank (not shown) other than the solid-liquid separation tank 10 with use of the activated sludge (not shown), for example.

Here, a retention time (average retention time) of the activated sludge in the reaction tank 81 is controlled so as to be shorter than that in the reaction tank 21, for example. Specifically, the retention time of the activated sludge in the reaction tank 81 is controlled to be a period of time (e.g., no longer than 4 days) in which ammonia contained in the wastewater is not oxidized (ammonia is not oxidized to nitrite), for example.

This allows the reaction tank 81 to supply effluent that contains more ammonia than nitrite to the anammox process 30 as described later.

The reaction tank 81 discharges the wastewater subjected to the biological treatment through a line L23 to the solid-liquid separation tank 82**.**

The line L23 is a pipe connecting the reaction tank 81 and the solid-liquid separation tank 82**.**

The solid-liquid separation tank 82 separates activated sludge contained in the wastewater discharged from the reaction tank 81 via the line L23.

The solid-liquid separation tank 82 supplies a portion of the separated activated sludge as surplus sludge through a line L24 to a concentrator (not shown), and returns the activated sludge other than the surplus sludge as return sludge through a return line (not shown) to the reaction tank 81, for example. The line L24 is a pipe connecting the solid-liquid separation tank 82 and the concentrator, for example. In addition, the solid-liquid separation tank 82 supplies the wastewater (effluent) from which the activated sludge has been separated, through a line L22 to the anammox process 30 as illustrated in FIG. 3. The line L22 is a pipe connecting the solid-liquid separation tank 82 and the anammox process 30.

Next, the following describes the anammox process 30. As illustrated in FIG. 6, the anammox process 30 includes an anammox reaction tank 31 (hereinafter also referred to as a "first anammox reaction tank 31"). Note that wastewater supplied to the anammox reaction tank 31 is the wastewater from which primary sludge has been separated in the solid-liquid separation tank 10, and accordingly, has a low-strength nitrogen. Therefore, the anammox process 30 is also referred to as the "anammox process (for treating low-strength wastewater) 30".

Anammox bacteria in the anammox reaction tank 31 produce nitrogen gas from ammonium nitrogen and nitrite nitrogen contained in a mixture of the wastewater supplied via the line L9 and the wastewater supplied via the line L22.

Hereinafter, the treatment in which anammox bacteria produce nitrogen gas from ammonium nitrogen and nitrite nitrogen will also be referred to as "anammox treatment".

In addition, the anammox reaction tank 31 discharges the wastewater (effluent) subjected to the anammox treatment through a line L10 to a downstream inactivation device (not shown), for example. The inactivation device then sterilizes the wastewater discharged from the anammox process 30 via the line L10, and releases the inactivated effluent, for example. The line L10 is a pipe connecting the anammox reaction tank 31 and the inactivation device, for example.

Namely, in the partial nitrification treatment system 20, the retention time of activated sludge is long and partial nitrification treatment is sufficiently performed on the wastewater, whereas in the activated sludge process with reduced nitrite-oxidizing bacterial biomass 80, the retention time of activated sludge is short and partial nitrification treatment is not sufficiently performed on the wastewater. Accordingly, effluent containing more nitrite than ammonia (hereinafter also referred to as "stream with nitrite nitrogen") is supplied from the partial nitrification treatment system 20 to the anammox reaction tank 31, whereas effluent containing more ammonia than nitrite (hereinafter also referred to as "stream with ammonium nitrogen") is supplied from the activated sludge process with reduced nitrite-oxidizing bacterial biomass 80 to the anammox reaction tank 31.

Therefore, in the biological treatment system 100 according to the present embodiment, it is possible to sufficiently produce ammonium nitrite and sufficiently denitrify nitrogen components through the anammox treatment in the anammox reaction tank 31.

Note that, in the anammox reaction tank 31, the anammox treatment may be performed on filtrate supplied from the concentrator 25 via the line L35 as illustrated in FIG. 4, for example.

Next, the following describes the methane fermentation process 40. As illustrated in FIG. 7, the methane fermentation process 40 includes a digestion tank 41, for example.

The primary sludge separated in the solid-liquid separation tank 10 and the surplus sludge separated in the solid-liquid separation tank 22 are supplied to the digestion tank 41 via a line L11, for example. The line L11 is a pipe connecting the concentrator (not shown) for concentrating the primary sludge to the digestion tank 41 and also connecting the concentrator (not shown) for concentrating the surplus sludge to the digestion tank 41, for example. Hereinafter, the primary sludge and the surplus sludge will also be collectively referred to as "thickened sludge".

In the digestion tank 41, organic matter contained in the thickened sludge is digested (decomposed) by anaerobic bacteria in the digestion tank 41 to produce digested sludge, for example. In this case, the anaerobic bacteria produce digestion gas such as methane gas in the process of digesting the organic matter. As illustrated in FIG. 3, the dehydrator 50 separates the digested sludge supplied from the digestion tank 41 via a line L12 into solid matter and separating liquid, for example. The line L12 is a pipe connecting the digestion tank 41 and the dehydrator 50, for example. The dehydrator 50 supplies the filtrate through a line L13 to the partial nitrification treatment system 60, and supplies the digested sludge (solid matter) from which the filtrate has been separated to downstream facilities such as an incinerator, for example. The line L13 is a pipe connecting the dehydrator 50 and the partial nitrification treatment system 60**.** Note that the dehydrator 50 may be a belt press dehydrator, for example.

Next, the following describes the partial nitrification treatment system 60. As illustrated in FIG. 8, the partial nitrification treatment system 60 includes a nitrification tank 61 (hereinafter also referred to as a "second reaction tank 61"). Note that the concentration of nitrogen components contained in the filtrate supplied from the methane fermentation process 40 (dehydrator 50) to the partial nitrification treatment system 60 is higher than the concentration of nitrogen components contained in the wastewater supplied from the solid-liquid separation tank 10 to the partial nitrification treatment system 20. Therefore, hereinafter, the partial nitrification treatment system 60 will also be referred to as the "partial nitrification treatment system (for treating high-strength wastewater) 60".

The nitrification tank 61 includes a fluidized bed (not shown) constituted by multiple carriers, for example, and biological treatment is performed on the filtrate discharged from the dehydrator 50 via the line L13 with use of ammonia-oxidizing bacteria attached to each carrier. Since the ammonia concentration in the filtrate fed to the nitrification tank 61 is sufficiently high, nitrogen components in the effluent subjected to the biological treatment in the nitrification tank 61 are almost completely converted to ammonium nitrite. The nitrification tank 61 then supplies at least a portion of the filtrate (ammonium and nitrite-containing liquid) subjected to the biological treatment through a line L14 to the inactivation tank 23 as illustrated in FIGS. 3 and 4. The line L14 is a pipe connecting the nitrification tank 61 and the inactivation tank 23. Also, the nitrification tank 61 supplies the remaining portion of the filtrate subjected to the biological treatment (a portion of the filtrate that is not supplied to the inactivation tank 23) via a line L15 to the anammox process 70. The line L15 is a pipe connecting the nitrification tank 61 and the anammox process 70.

That is, the concentration of nitrogen components in the filtrate supplied from the methane fermentation process 40 via the dehydrator 50 is about 2000 mgN/L, for example. Therefore, the filtrate subjected to the biological treatment in the nitrification tank 61 contains about 2000 mgN/L of ammonium nitrite (i.e., about 1000 mgN/L of nitrite), for example.

Therefore, in the biological treatment system 100 according to the present embodiment, the filtrate subjected to the biological treatment in the nitrification tank 61 can be used as the inactivation liquid in the inactivation tank 23**.**

Note that it is possible to obtain a filtrate having a higher nitrite concentration (i.e., a filtrate with higher ability to sterilize nitrite-oxidizing bacteria) by increasing the reaction time of partial nitrification treatment in the nitrification tank 61. However, nitrite is strongly acidic, and therefore, even a slightly higher ratio of nitrite in the filtrate supplied from the nitrification tank 61 significantly reduces the pH in the inactivation tank 23. Also, the reaction rate of ammonia-oxidizing bacteria is generally almost zero when the pH is about 4.3. Therefore, it is difficult to use a filtrate with a higher nitrite concentration as the inactivation liquid in the inactivation tank 23 because it is necessary to maintain ammonia-oxidizing bacteria.

Next, the following describes the anammox process 70. As illustrated in FIG. 9, the anammox process 70 includes an anammox reaction tank 71 (hereinafter also referred to as a "second anammox reaction tank 71"). Note that the concentration of nitrogen components contained in the filtrate supplied from the partial nitrification treatment system 60 to the anammox process 70 is higher than the concentration of nitrogen components contained in the filtrate supplied from the partial nitrification treatment system 20 to the anammox process 30. Therefore, the anammox process 70 will also be referred to as the "anammox process (for treating high-strength wastewater) 70".

In the anammox reaction tank 71, anammox treatment is performed on the ammonium nitrite contained in the filtrate (ammonium and nitrite-containing liquid) supplied from the nitrification tank 61 via the line L15**.** The anammox reaction tank 71 supplies the filtrate subjected to the anammox treatment through a line L16 to the solid-liquid separation tank 10, for example. The line L16 is a pipe connecting the anammox reaction tank 71 and the solid-liquid separation tank 10, for example.

Note that, in the anammox reaction tank 71, the anammox treatment may also be performed on filtrate supplied from the concentrator 25 via the line L35 as illustrated in FIG. 4, for example.

Namely, in the biological treatment system 100 according to the present embodiment, it is possible to selectively sterilize nitrite-oxidizing bacteria contained in activated sludge while maintaining ammonia-oxidizing bacteria contained in the activated sludge by keeping the pH in the inactivation tank 23 at an approximately neutral level or lower, for example. As a result, nitrification of nitrite by the nitrite-oxidizing bacteria can be suppressed, and nitrite nitrogen can be obtained from wastewater. Therefore, in the biological treatment system 100, it is possible to perform denitrification of nitrogen components contained in the wastewater through the anammox treatment, and significantly reduce the amount of oxygen (aeration cost) required for the denitrification of nitrogen components contained in the wastewater.

Moreover, in the biological treatment system 100 according to the present embodiment, ammonium nitrite supplied from the partial nitrification treatment system 60 is used as the inactivation liquid, and accordingly, even if the concentration of nitrogen components in wastewater supplied to the partial nitrification treatment system 20 is low, it is possible to perform the anammox treatment in the anammox process 30. Therefore, in the biological treatment system 100, it is possible to separate a large amount of pollutants contained in the wastewater (e.g., approximately 70% of the pollutants contained in the wastewater) as primary sludge in the solid-liquid separation tank 10, and recover a larger amount of digestion gas (e.g., 1.3 to 1.5 times the amount of digestion gas recovered in conventional systems) in the methane fermentation process 40, for example.

Therefore, in the biological treatment system 100 according to the present embodiment, it is possible to significantly reduce the amount of oxygen (aeration cost) required for denitrification of nitrogen components contained in wastewater and recover more digestion gas when compared with conventional systems.

### [Experiment Examples of Biological Treatment System 100]

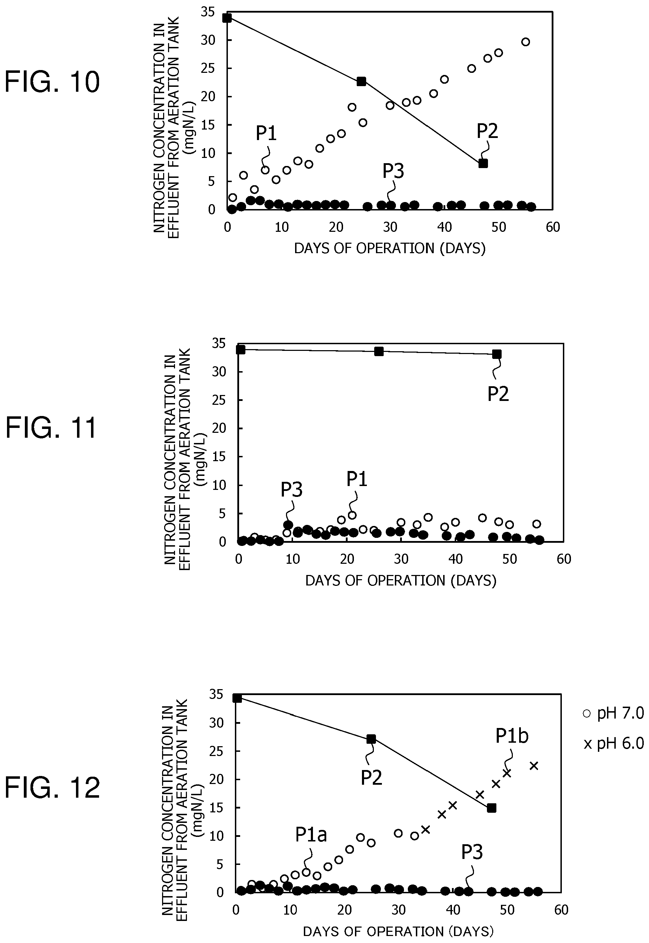

Next, experiment examples of the biological treatment system 100 will be described. FIGS. 10 to 12 are graphs representing experiment examples of the biological treatment system 100. Specifically, the following experiment examples are experiment examples for confirming the state of generation of nitrite nitrogen in effluent in the reaction tank 21. Note that the horizontal axis in FIGS. 10 to 12 indicates the number of days elapsed from the start of the experiments of the biological treatment system 100. The vertical axis in FIGS. 10 to 12 indicates the concentration of nitrogen components in the effluent in the reaction tank 21.

### [Experiment examples of cases where inactivation tank 23 etc., were not used]

First, the following describes experiment examples of cases where a partial nitrification treatment system 20 including the reaction tank 21 and the solid-liquid separation tank 22 (partial nitrification treatment system 20 not including the inactivation tank 23, the concentrator 24, and the concentrator 25) was used. Specifically, Experiment Examples 1 and 2 are examples of experiments in which the partial nitrification treatment system 20 including the reaction tank 21 and the solid-liquid separation tank 22 was used.

### (Experiment Example 1)

In Experiment Example 1, an experiment was conducted with use of wastewater obtained by mixing 67.5 mg/L of polypeptone and 67.5 mg/L of yeast extract (wastewater whose COD_{Cr} was 180 mgCOD/L and nitrogen component concentration was 45 mgN/L). COD stands for Chemical Oxygen Demand. In Experiment Example 1, a reaction tank 21 with a tank load of 1.8 kgCOD/m³/d was used, and SRT (Sludge Retention Time) in a reaction tank (e.g., the reaction tank 21) was set to 15 days.

As a result, 38 mgN/L of soluble nitrogen components, which corresponds to almost the whole amount thereof, contained in the effluent in a steady state (state where MLSS concentration in the reaction tank was 4000 mg/L) after 40 days was nitrate nitrogen.

### (Experiment Example 2)

In Experiment Example 2, an experiment was conducted by reducing the SRT in the reaction tank (e.g., the reaction tank 21) of Experiment Example 1 stepwise, when compared with the conditions of Experiment Example 1.

As a result, almost the whole amount of soluble nitrogen components contained in the effluent was nitrate nitrogen, as in Experiment Example 1, while the SRT in the reaction tank was reduced to 5 days.

On the other hand, when the SRT in the reaction tank was reduced to 4 days, ammonium nitrogen and nitrite nitrogen started to be detected in the effluent, and when the SRT in the reaction tank was further reduced to 3 days, nitrification completely stopped, and almost the whole amount of soluble nitrogen components contained in the effluent was ammonium nitrogen.

Namely, the result of Experiment Example 2 shows that ammonia-oxidizing bacteria and nitrite-oxidizing bacteria are not generated when the SRT in the reaction tank 21 is set to 4 days or less, for example.

### [Experiment example of cases where the inactivation tank 23 etc., were used]

Next, the following describes experiment examples of cases where a partial nitrification treatment system 20 including the inactivation tank 23, the concentrator 24, and the concentrator 25 (i.e., the partial nitrification treatment system 20 described with reference to FIG. 4) was used. Specifically, Experiment Example 3 and the following experiment examples are examples of experiments in which the partial nitrification treatment system 20 described with reference to FIG. 4 was used.

### (Experiment Example 3)

In Experiment Example 3, an experiment was conducted with the SRT in the reaction tank (e.g., the reaction tank 21) of Experiment Example 1 set to 10 days. In Experiment Example 3, 30% of activated sludge in the reaction tank 21 was withdrawn per day, and the withdrawn activated sludge was subjected to centrifugal concentration in the concentrator 24 and continuously fed to the inactivation tank 23. The inactivation time of the activated sludge in the inactivation tank 23 was set to 15 days. Also, in Experiment Example 3, the concentration of nitrite nitrogen in the inactivation tank 23 was kept at about 1000 mgN/L by adding nitrite as an inactivation liquid to the inactivation tank 23 from outside. In Experiment Example 3, the inactivation operation was carried out continuously under microaerobic conditions in which dissolved oxygen was detected in the inactivation tank 23. Furthermore, in Experiment Example 3, the pH in the inactivation tank 23 was kept between 7.0 and 7.3. In addition, continuous operation was carried out by subjecting the sludge in the inactivation tank 23 to solid-liquid separation and returning the sludge to the reaction tank 21.

As a result, nitrite nitrogen started to be detected in the effluent immediately after the start of the experiment in Experiment Example 3. In Experiment Example 3, the concentration of nitrite nitrogen in the effluent reached 25 mgN/L in about two months after the start of the experiment. Note that the concentration of nitrate nitrogen in the effluent was about 8 mgN/L, and the concentration of ammonium nitrogen was about 2 mgN/L.

Specifically, nitrite nitrogen in the effluent increased with the passage of days after the start of the experiment, as shown by points P1 (while circles) in FIG. 10. On the other hand, nitrate nitrogen in the effluent decreased with the passage of days after the start of the experiment, as shown by points P2 (black squares) in FIG. 10. Also, ammonium nitrogen in the effluent did not increase or decrease significantly with the passage of days after the start of the experiment, as shown by points P3 (black circles) in FIG. 10.

Namely, the result of Experiment Example 3 shows that the death of ammonia-oxidizing bacteria is suppressed when the pH in the inactivation tank 23 is kept at an approximately neutral level or lower.

### (Experiment Example 4)

In Experiment Example 4, an experiment was conducted by changing the nitrite fed to the inactivation tank 23 to ammonium nitrite and changing the pH in the inactivation tank 23 to 8.0, when compared with the conditions of Experiment Example 3.

As a result, ammonium nitrogen started to be detected in the effluent immediately after the start of the experiment in Experiment Example 4. In Experiment Example 4, nitrification completely stopped about 10 days after the start of the experiment, and almost the whole amount of soluble nitrogen components contained in the effluent was ammonium nitrogen.

Namely, the result of Experiment Example 4 shows that ammonia-oxidizing bacteria are killed if the pH in the inactivation tank 23 is 8, which is alkaline.

### (Experiment Example 5)

In Experiment Example 5, an experiment was conducted by changing the inactivation time of activated sludge in the inactivation tank 23 to 40 days, when compared with the conditions of Experiment Example 3.

As a result, ammonium nitrogen started to be detected in the effluent about 10 days after the start of the experiment in Experiment Example 5. In Experiment Example 5, nitrification completely stopped about 60 days after the start of the experiment, and almost the whole amount of soluble nitrogen components contained in the effluent was ammonium nitrogen.

Namely, the result of Experiment Example 5 shows that, if the inactivation time of the activated sludge in the inactivation tank 23 is 30 days or longer, for example, ammonia-oxidizing bacteria are killed even if the pH in the inactivation tank 23 is neutral.

### (Experiment Example 6)

In Experiment Example 6, an experiment was conducted by changing the SRT in the reaction tank 21 to 20 days, when compared with the conditions of Experiment Example 3. Also, in Experiment Example 6, 20% of the activated sludge in the reaction tank 21 was withdrawn per day, and the withdrawn activated sludge was subjected to centrifugal concentration in the concentrator 24 and continuously fed to the inactivation tank 23. The inactivation time of the activated sludge in the inactivation tank 23 was changed to 5 days.

As a result, in Experiment Example 6, almost the whole amount of soluble nitrogen components contained in the effluent was nitrate nitrogen, as in Experiment 1. That is, in Experiment Example 6, nitrite nitrogen could not be obtained in the effluent.

Specifically, nitrite nitrogen in the effluent did not increase significantly with the passage of days after the start of the experiment, as shown by points P1 (while circles) in FIG. 11, and nitrate nitrogen in the effluent did not decrease significantly with the passage of days after the start of the experiment, as shown by points P2 (black squares) in FIG. 11. Also, ammonium nitrogen in the effluent did not increase or decrease significantly with the passage of days after the start of the experiment, as shown by points P3 (black circles) in FIG. 11.

### (Experiment Example 7)

In Experiment Example 7, an experiment was conducted by changing the SRT in the reaction tank 21 to 15 days, when compared with the conditions of Experiment Example 6. Also, in Experiment Example 7, 25% of the activated sludge in the reaction tank 21 was withdrawn per day, and the withdrawn activated sludge was subjected to centrifugal concentration in the concentrator 24 and continuously fed to the inactivation tank 23. The inactivation time of the activated sludge in the inactivation tank 23 was changed to 10 days. Furthermore, in Experiment Example 7, the pH in the inactivation tank 23 was changed to 7.0.

As a result, in Experiment Example 7, the concentration of soluble nitrite nitrogen in the effluent became constant at about 10 mgN/L about 30 days after the start of the experiment.

Thereafter, when the pH in the inactivation tank 23 was changed to 6.0 in Experiment Example 7, the concentration of nitrite nitrogen in the effluent in the reaction tank 21 increased rapidly within a few days, and reached about 25 mgN/L.

Specifically, as shown by points P1a (white circles) in FIG. 12, nitrite nitrogen in the effluent increased with the passage of days after the start of the experiment while the pH was kept at 7.0 until 30 days elapsed from the start of the experiment. When the pH was changed to 6.0 after 30 days had elapsed from the start of the experiment, nitrite nitrogen in the effluent increased more significantly with the passage of days, as shown by points P1b (cross marks) in FIG. 12. On the other hand, nitrate nitrogen in the effluent decreased with the passage of days after the start of the experiment, as shown by points P2 (black squares) in FIG. 12. Also, ammonium nitrogen in the effluent did not increase or decrease significantly with the passage of days after the start of the experiment, as shown by points P3 (black circles) in FIG. 12.

Namely, the result of Experiment Example 7 shows that the concentration of nitrite nitrogen increases when the inside of the inactivation tank 23 is acidic (e.g., pH 6.0 or lower).

Note that the reaction rate of ammonia-oxidizing bacteria decreases with a reduction in the pH in the inactivation tank 23. Therefore, the pH in the inactivation tank 23 is preferably 5.0 or higher and 6.0 or lower, for example.

### (Experiment Example 8)

In Experiment Example 8, filtrate (methane fermentation filtrate with an ammonia (ammonium bicarbonate) nitrogen concentration of 2000 mgN/L) separated from digested sludge in the dehydrator 50 was fed to an aerobic nitrification tank 61 (fluidized bed) at a constant flow rate.

As a result, in Experiment Example 8, the pH in the nitrification tank 61 decreased through nitrification, so the amount of filtrate was increased to neutralize the pH. As a result, effluent with a pH of 7.0 (effluent with an ammonium nitrogen concentration of 1000 mgN/L and a nitrite nitrogen concentration of 1000 mgN/L) was obtained in Experiment Example 8.

Also, in an operation in which the **pH** in the nitrification tank 61 was set to 6.0, the ratio of nitrite nitrogen in the effluent increased, and the nitrite nitrogen concentration in the effluent reached 1050 mgN/L. Furthermore, in an operation in which the **pH** in the nitrification tank 61 was set to 5.0, the ratio of nitrite nitrogen in the effluent increased further.

On the other hand, in an operation in which the **pH** in the nitrification tank 61 was set to 4.5, a certain amount of filtrate was passed through the nitrification tank 61, but in an operation in which the **pH** in the nitrification tank 61 was set to 4.0, the nitrification rate in the nitrification tank 61 became almost zero, and accordingly, the amount of filtrate became almost zero.

Namely, the results of Experiment Example 8 show that the pH in the nitrification tank 61 (the pH of ammonium nitrite supplied from the nitrification tank 61 to the inactivation tank 23) is preferably 4.5 or higher and 7.0 or lower when partial nitrification treatment is performed in the reaction tank 21.

### (Experiment Example 9)

In Experiment Example 9, activated sludge supplied from the reaction tank 21 was continuously fed to the inactivation tank 23 without being concentrated in the concentrator 24, when compared with the conditions of Experiment Example 7.

As a result, in Experiment Example 9, the inactivation time in the inactivation tank 23 decreased to one-tenth of that in Experiment Example 7, and almost the whole amount of soluble nitrogen components contained in the effluent in the reaction tank 21 was nitrate nitrogen.

### (Experiment Example 10)

In Experiment Example 10, activated sludge inactivated in the inactivation tank 23 was returned to the reaction tank 21 without being concentrated in the concentrator 25, when compared with the conditions of Experiment Example 7.

As a result, in Experiment Example 10, all ammonium nitrogen in the inactivation tank 23 was returned to the reaction tank 21, and the amount of oxygen used for aeration in the reaction tank 21 increased to about 40 times as much as that in Experiment Example 7.

Note that when the filtrate separated from the activated sludge in the concentrator 25 was passed through the anammox reaction tank 31 (anammox reaction tank 71) in Experiment Example 7, nitrite nitrogen contained in the filtrate was decomposed almost completely within one hour together with ammonium nitrogen contained in the filtrate.

### (Experiment Example 11)

In Experiment Example 11, an experiment was conducted by changing the concentration of nitrite nitrogen in the inactivation tank 23 to 250 mgN/L, when compared with the conditions of Experiment Example 7. Furthermore, in Experiment Example 11, the pH in the inactivation tank 23 was set to 6.0.

As a result, in Experiment Example 11, the composition of soluble nitrogen components contained in the effluent in the reaction tank 21 transitioned in the same manner as in Experiment Example 1 for one month, and it was not possible to obtain a sufficient amount of nitrite nitrogen.

When the pH in the inactivation tank 23 was thereafter changed to 5.5 in Experiment Example 11, the amount of nitrite nitrogen contained in the effluent increased. After one month, the concentration of nitrite nitrogen in the effluent in the reaction tank 21 reached about 25 mgN/L, which is the same level as that in Experiment Example 3.

Namely, the results of Experiment Example 11 show that even if the concentration of nitrite nitrogen in the inactivation tank 23 is reduced, the concentration of nitrite nitrogen in the reaction tank 21 increases when the inside of the inactivation tank 23 is made more acidic.

### (Experiment Example 12)

In Experiment Example 12, the pH in the inactivation tank 23 was changed to 5.5, and the inactivation tank 23 was changed to a smaller tank, when compared with the conditions of Experiment Example 7. The inactivation time of activated sludge in the inactivation tank 23 was changed to 5 days.

As a result, in Experiment Example 12, nitrite nitrogen contained in the effluent in the reaction tank 21 gradually decreased to 20 mgN/L, and nitrate nitrogen contained in the effluent increased accordingly.

Thereafter, when the inactivation time of activated sludge in the inactivation tank 23 was changed to 4 days by changing the inactivation tank 23 to a smaller tank in Experiment Example 12, the concentration of nitrite nitrogen in the effluent in the reaction tank 21 rapidly decreased, and almost the whole amount of soluble nitrogen components contained in the effluent became nitrate nitrogen within about one month.

Namely, the results of Experiment Example 12 show that, when partial nitrification treatment is performed in the reaction tank 21, the inactivation time of activated sludge in the inactivation tank 23 is preferably 5 days or longer, for example.

### (Experiment Example 13)

In Experiment Example 13, an experiment was conducted by increasing the SRT in the reaction tank 21 stepwise, when compared with the conditions of Experiment Example 7 conducted with the pH in the inactivation tank 23 set to 6.0.

As a result, in an operation in which the SRT in the reaction tank 21 was set to 17 days in Experiment Example 13, nitrite nitrogen contained in the effluent in the reaction tank 21 gradually decreased to 20 mgN/L, and nitrate nitrogen contained in the effluent increased accordingly.

Also, in an operation in which the SRT in the reaction tank 21 was set to 18 days in Experiment Example 13, nitrite nitrogen contained in the effluent in the reaction tank 21 rapidly decreased. Thereafter, almost the whole amount of soluble nitrogen components in the effluent became nitrate nitrogen within about two weeks.

On the other hand, when the SRT in the reaction tank 21 was returned to 15 days in Experiment Example 13, nitrite nitrogen started to be observed in the effluent in the reaction tank 21. About a month later, 25 mgN/L of nitrite nitrogen was obtained.

Namely, the results of Experiment Example 13 show that, when partial nitrification treatment is performed in the reaction tank 21, the SRT in the reaction tank 21 needs to be set to 15 days or less, for example.

### (Experiment Example 14)

In Experiment Example 14, an experiment was conducted by reducing the amount (feed amount) of activated sludge fed to the inactivation tank 23 stepwise, when compared with the conditions of Experiment Example 7 conducted with the pH in the inactivation tank 23 set to 6.0.

As a result, in an operation in which the amount of sludge fed per day was equal to 25% of activated sludge retained in the reaction tank 21 in Experiment Example 14, the concentration of nitrite nitrogen contained in the effluent in the reaction tank 21 was 25 mgN/L.

In an operation in which the amount of sludge fed per day was equal to 5% of activated sludge retained in the reaction tank 21 in Experiment Example 14, nitrite nitrogen contained in the effluent in the reaction tank 21 decreased to 20 mgN/L, and nitrate nitrogen contained in the treatment water increased accordingly.

Furthermore, in an operation in which the amount of sludge fed per day was equal to 4% of activated sludge retained in the reaction tank 21 in Experiment Example 14, nitrite nitrogen contained in the effluent in the reaction tank 21 rapidly decreased. Thereafter, almost the whole amount of soluble nitrogen components in the effluent became nitrate nitrogen within about two weeks.

Namely, the results of Experiment Example 14 show that, when partial nitrification treatment is performed in the reaction tank 21, the amount of sludge fed to the inactivation tank 23 per day is preferably 5% or more of activated sludge retained in the reaction tank 21, for example.

### (Experiment Example 15)

In Experiment Example 15, an experiment was conducted by using ammonium nitrite (ammonium nitrite with a pH of 7.0 and a nitrogen component concentration of 2000 mgN/L) obtained in Experiment Example 8 as an inactivation liquid, when compared with the conditions of Experiment Example 3.

As a result, in Experiment Example 15, the concentration of nitrite nitrogen in the effluent in the reaction tank 21 became almost constant at 25 mgN/L.

Thereafter, when the pH in the inactivation tank 23 was reduced to 5.5 by adding inorganic acid (e.g., dilute sulfuric acid) to the inactivation tank 23, the amount of nitrite nitrogen contained in the effluent in the reaction tank 21 reached 38 mgN/L, which corresponds to almost the whole amount of nitrogen components. The concentrations of nitrate nitrogen and ammonium nitrogen were both 1 mgN/L or less.

### (Experiment Example 16)

In Experiment Example 16, an experiment was conducted by stopping aeration in the inactivation tank 23 to perform control such that the dissolved oxygen concentration in the inactivation tank 23 became zero, compared with the conditions of Experiment Example 7.

As a result, the concentration of nitrite nitrogen in the inactivation tank 23 decreased from 1000 mgN/L to 500 mgN/L due to the action of denitrification bacteria contained in the activated sludge, and the pH in the inactivation tank 23 increased from 6.0 to 7.0.

Thereafter, when the operation was continued by adjusting the pH in the inactivation tank 23 again to 6.0 by adding dilute sulfuric acid to the inactivation tank 23, the concentration of nitrite nitrogen in the effluent in the reaction tank 21 decreased from about 25 mgN/L to about 20 mgN/L, and nitrate nitrogen contained in the effluent increased accordingly.

On the other hand, when the aeration was resumed in the inactivation tank 23, the concentration of nitrite nitrogen in the effluent in the inactivation tank 23 returned to 1000 mgN/L, and the concentration of nitrite nitrogen in the effluent in the reaction tank 21 also returned to 25 mgN/L.

Namely, the results of Experiment Example 16 show that it is preferable to perform aeration in the inactivation tank 23 to suppress the action of denitrification bacteria contained in the activated sludge supplied from the reaction tank 21.

### (Experiment Example 17)

In Experiment Example 17, an experiment was conducted in which a mixture of the effluent obtained in the reaction tank 21 in Experiment Example 7 and the effluent obtained in the reaction tank 21 in Experiment Example 2 was passed through the anammox reaction tank 31. In the mixture used in Experiment Example 17, the ratio between the effluent obtained in the reaction tank 21 in Experiment Example 7 and the effluent obtained in the reaction tank 21 in Experiment Example 2 was 1:1.

As a result, several mgN/L of ammonium nitrogen remained in the effluent in the anammox reaction tank 31 in Experiment Example 17.

Also, when Experiment Example 17 was conducted with use of a mixture in which the ratio between the effluent obtained in the reaction tank 21 in Experiment Example 7 and the effluent obtained in the reaction tank 21 in Experiment Example 2 was 2:1, ammonium nitrogen contained in the effluent in the anammox reaction tank 31 decreased to 1 mgN/L.

### [Variations of the First Embodiment]

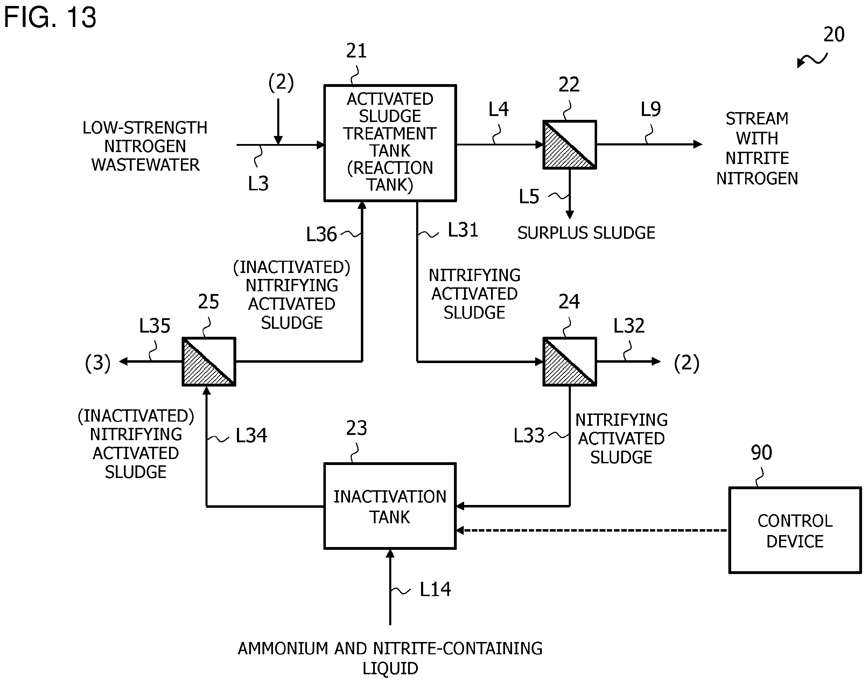

Next, the following describes variations of the first embodiment. FIG. 13 is a diagram illustrating the configuration of a partial nitrification treatment system 20 according to a variation of the first embodiment.

In the example described above, the pH in the inactivation tank 23 is adjusted manually by the administrator, but there is no limitation to this configuration. As illustrated in FIG. 13, a control device 90 may automatically control the pH in the inactivation tank 23 in the biological treatment system 100. The control device 90 is a computer including a CPU (Central Computing Unit), a memory, etc., for example.

Specifically, the control device 90 may control the pH in the inactivation tank 23 to an approximately neutral level or lower, for example. More specifically, the control device 90 may control the pH in the inactivation tank 23 to an approximately neutral level or lower by controlling the amount of dilute sulfuric acid added to the inactivation tank 23, for example.

Also, in the example described above, effluent is supplied to the anammox process 30 from the partial nitrification treatment system 20 and the activated sludge process with reduced nitrite-oxidizing bacterial biomass 80. A non-claimed configuration is also possible in which effluent is supplied to the anammox process 30 only from the partial nitrification treatment system 20.

Also, in the example described above, ammonium nitrite supplied from the partial nitrification treatment system 60 is used as the inactivation liquid in the inactivation tank 23**.** In a non claimed embodiment, in the inactivation tank 23, nitrites other than ammonium nitrite supplied from the partial nitrification treatment system 60 may be used as the inactivation liquid.

### REFERENCE SIGNS LIST

- 10: solid-liquid separation tank
- 20: partial nitrification treatment system
- 21: reaction tank
- 22: solid-liquid separation tank
- 23: inactivation tank
- 24: concentrator
- 25: concentrator
- 30: anammox process
- 31: anammox reaction tank
- 40: methane fermentation process
- 41: digestion tank
- 50: dehydrator
- 60: partial nitrification treatment system
- 61: nitrification tank
- 70: anammox process
- 71: anammox reaction tank
- 80: activated sludge process with reduced nitrite-oxidizing bacterial biomass
- 81: reaction tank
- 82: solid-liquid separation tank
- 90: control device
- 100: biological treatment system
- 800: biological treatment system
- 810: solid-liquid separation tank
- 821: reaction tank
- 822: solid-liquid separation tank
- 900: biological treatment system
- 910: solid-liquid separation tank
- 921: reaction tank
- 922: solid-liquid separation tank
- 930: anammox process
- L1: line
- L2: line
- L3: line
- L4: line
- L5: line
- L9: line
- L10: line
- L11: line
- L12: line
- L13: line
- L14: line
- L15: line
- L16: line
- L21: line
- L22: line
- L23: line
- L24: line
- L31: line
- L32: line
- L33: line
- L34: line
- L35: line
- L36: line
- L801: line
- L802: line
- L803: line
- L804: line
- L805: line
- L806: line
- L901: line
- L902: line
- L903: line
- L904: line
- L905: line
- L909: line
- L910: line
- P1: point
- P1a: point
- P1b: point
- P2: point
- P3: point

## Claims

1. A biological treatment method for biologically treating nitrogen components contained in organic wastewater, the method comprising:
performing, in a first reaction tank (21), partial nitrification treatment on ammonium nitrogen contained in the organic wastewater with use of ammonia-oxidizing bacteria contained in activated sludge;
supplying the activated sludge from the first reaction tank (21) to an inactivation tank (23);
inactivating, in the inactivation tank (23), nitrite-oxidizing bacteria contained in the activated sludge supplied from the first reaction tank (21) with use of nitrite nitrogen while keeping pH at an approximately neutral level or lower;
supplying an inactivated sludge to the first reaction tank (21);
in a first solid-liquid separation device (24), separating the activated sludge prior to being supplied to the inactivation tank (23) into first solid matter and filtrate;
supplying the first solid matter from the first solid-liquid separation device (24) to the inactivation tank (23);
in a second solid-liquid separation device (25), separating the activated sludge supplied from the inactivation tank (23) into second solid matter and first filtrate;
supplying the second solid matter to the first reaction tank (21);
in a third solid-liquid separation device (22), separating, as surplus sludge, the activated sludge retained in the first reaction tank (21);
digesting at least primary sludge or the surplus sludge in a digestion tank (41);
in a fourth solid-liquid separation device (50), separating at least the digested primary sludge or the digested surplus sludge into solid matter and second filtrate;
supplying the second filtrate from the fourth solid-liquid separation device (50) to a second reaction tank (61);
in the second reaction tank (61), performing partial nitrification treatment on ammonium nitrogen contained in the second filtrate supplied from the fourth solid-liquid separation device (50), with use of ammonia-oxidizing bacteria;
supplying the second filtrate, which has been subjected to the partial nitrification treatment, from the second reaction tank (61) to the inactivation tank (23);
inactivating, in the inactivation tank (23), nitrite-oxidizing bacteria contained in the activated sludge supplied from the first reaction tank (21) with use of nitrite nitrogen contained in the second filtrate supplied from the second reaction tank (61);
performing, in a third reaction tank (81), partial nitrification treatment on ammonium nitrogen contained in other organic wastewater with use of ammonia-oxidizing bacteria contained in other activated sludge;
supplying the organic wastewater, from which the activated sludge has been separated, from the third solid-liquid separation device (22) to a first anammox reaction tank (31);
supplying the other organic wastewater, which has been subjected to the partial nitrification treatment, from the third reaction tank (81) to the first anammox reaction tank (31), wherein a retention time of the other activated sludge in the third reaction tank (81) is controlled to be shorter than a retention time of the activated sludge in the first reaction tank (21), wherein the retention time is controlled to be a period of time no longer than a period of time in which ammonia contained in the other organic wastewater is not oxidized to nitrite; and
performing, in the first anammox reaction tank (31), anammox treatment on ammonium nitrogen and nitrite nitrogen contained in a mixture of the organic wastewater supplied from the third solid-liquid separation device (22) and the other organic wastewater supplied from the third reaction tank (81).

2. The biological treatment method according to claim 1, further comprising:
supplying the first filtrate separated by the second solid-liquid separation device (25) to at least one of the first anammox reaction tank (31) and a second anammox reaction tank (71); and
performing, in the second anammox reaction tank (71), anammox treatment with use of anammox bacteria on ammonium nitrogen and nitrite nitrogen contained in at least one of the second filtrate supplied from the second reaction tank (61) and the first filtrate supplied from the second solid-liquid separation device (25).

3. A biological treatment system (100) for biologically treating nitrogen components contained in organic wastewater, the system (100) comprising:
a solid-liquid separation tank (10) connected to a source of wastewater by a line (L1), which solid-liquid separation tank (10) separates pollutants contained in the wastewater and discharges the pollutants as primary sludge through a line (L2) and the wastewater from which the pollutants have been separated, through a line (L3) and a line (L21);
a first reaction tank (21) connected by the line (L3) to the solid-liquid separation tank (10) and in which partial nitrification treatment is performed on ammonium nitrogen contained in the organic wastewater with use of ammonia-oxidizing bacteria contained in activated sludge;
an inactivation tank (23) in which nitrite-oxidizing bacteria contained in the activated sludge supplied from the first reaction tank (21) are inactivated by nitrite nitrogen while pH is kept at an approximately neutral level or lower;
a first solid-liquid separation device (24) connected to the first reaction tank (21) by a line (L31) and to the inactivation tank (23) by a line (L33), in which first solid-liquid separation device (24) the activated sludge is separated prior to being supplied to the inactivation tank (23) into first solid matter and filtrate;
a second solid-liquid separation device (25) connected to the inactivation tank (23) by a line (L34) and to the first reaction tank (21) by a line (L36), in which second solid-liquid separation device (25) the activated sludge supplied from the inactivation tank (23) is separated into second solid matter, which is supplied to the first reaction tank (21), and first filtrate;
a third solid-liquid separation device (22) connected to the first reaction tank (21) by a line (L4), in which third solid-liquid separation device (22), the activated sludge retained in the first reaction tank (21) and contained in the wastewater discharged from the first reaction tank (21) via the line (L4) is
separated as surplus sludge;
a digestion tank (41), in which at least primary sludge or the surplus sludge supplied via a line (L11) is digested;
a fourth solid-liquid separation device (50), in which at least the digested primary sludge or the digested surplus sludge is separated into solid matter and second filtrate;
a second reaction tank (61) to which the second filtrate from the fourth solid-liquid separation device (50) is supplied via a line (L13) and in which partial nitrification treatment on ammonium nitrogen contained in the second filtrate supplied from the fourth solid-liquid separation device (50), with use of ammonia-oxidizing bacteria is performed, wherein the second reaction tank (61) is connected to the inactivation tank (23) by a line (L14) for supplying the second filtrate, which has been subjected to the partial nitrification treatment, from the second reaction tank (61) to the inactivation tank (23);
a third reaction tank (81), in which partial nitrification treatment on ammonium nitrogen contained in the wastewater discharged from the solid-liquid separation tank (10) via line (L21) with use of ammonia-oxidizing bacteria contained in other activated sludge is performed;
a solid-liquid separation tank (82), to which the third reaction tank (81) is connected by a line (L23) for discharging the wastewater subjected to the partial nitrification treatment to the solid-liquid separation tank (82) and in which solid-liquid separation tank (82) activated sludge contained in the wastewater discharged from the third reaction tank (81) is separated;
a first anammox reaction tank (31) to which the organic wastewater, from which the activated sludge has been separated, from the third solid-liquid separation device (22) is supplied by a line (L9) and to which the other organic wastewater, which has been subjected to the partial nitrification treatment in the third reaction tank (81) and from which the activated sludge has been separated in the solid-liquid separation tank (82) by a line (L22) is supplied, in which first anammox reaction tank (31) anammox treatment on ammonium nitrogen and nitrite nitrogen contained in a mixture of the organic wastewater supplied from the third solid-liquid separation device (22) and the other organic wastewater supplied from the third reaction tank (81) is performed; and
a second anammox reaction tank (71) connected to the second reaction tank (61) by a line (L15), in which second anammox reaction tank (71) anammox treatment is performed on ammonium nitrite contained in the second filtrate which has been subjected to partial nitrification in said second reaction tank (61).

## Patentansprüche

1. Biologisches Behandlungsverfahren zur biologischen Behandlung von Stickstoffkomponenten, die in organischem Abwasser enthalten sind, wobei das Verfahren umfasst:
Durchführen von partieller Nitrifikationsbehandlung an Ammoniumstickstoff, der in dem organischen Abwasser enthalten ist, in einem ersten Reaktionsbehälter (21) unter Verwendung von ammoniakoxidierenden Bakterien, die in Belebtschlamm enthalten sind;
Zuführen des Belebtschlamms aus dem ersten Reaktionsbehälter (21) zu einem Inaktivierungsbehälter (23) ;
Inaktivieren von nitritoxidierenden Bakterien, die in dem aus dem ersten Reaktionsbehälter (21) zugeführten Belebtschlamm enthalten sind, in dem Inaktivierungsbehälter (23) unter Verwendung von Nitritstickstoff unter Halten des pH-Werts auf einem etwa neutralen Wert oder darunter;
Zuführen eines inaktivierten Schlamms zu dem ersten Reaktionsbehälter (21);
in einer ersten Fest-Flüssig-Trennvorrichtung (24) Trennen des Belebtschlamms in ersten Feststoff und Filtrat vor Zuführen zu dem Inaktivierungsbehälter (23); Zuführen des ersten Feststoffs aus der ersten Fest-Flüssig-Trennvorrichtung (24) zu dem Inaktivierungsbehälter (23);
in einer zweiten Fest-Flüssig-Trennvorrichtung (25) Trennen des aus dem Inaktivierungsbehälter (23) zugeführten Belebtschlamms in zweiten Feststoff und erstes Filtrat;
Zuführen des zweiten Feststoffs zu dem ersten Reaktionsbehälter (21);
in einer dritten Fest-Flüssig-Trennvorrichtung (22) Trennen des in dem ersten Reaktionsbehälter (21) verbliebenen Belebtschlamms als überschüssigen Schlamm;
Faulen von wenigstens Primärschlamm oder des überschüssigen Schlamms in einem Faulbehälter (41);
in einer vierten Fest-Flüssig-Trennvorrichtung (50) Trennen wenigstens des gefaulten Primärschlamms oder des gefaulten überschüssigen Schlamms in Feststoff und zweites Filtrat;
Zuführen des zweiten Filtrats von der vierten Fest-Flüssig-Trennvorrichtung (50) zu einem zweiten Reaktionsbehälter (61);
in dem zweiten Reaktionsbehälter (61) Durchführen von partieller Nitrifikationsbehandlung an Ammoniumstickstoff, der in dem zweiten Filtrat enthalten ist, das von der vierten Fest-Flüssig-Trennvorrichtung (50) zugeführt wird, unter Verwendung von ammoniakoxidierenden Bakterien;
Zuführen des zweiten Filtrats, das der partiellen Nitrifikationsbehandlung unterzogen worden ist, von dem zweiten Reaktionsbehälter (61) zu dem Inaktivierungsbehälter (23);
Inaktivieren von nitritoxidierenden Bakterien, die in dem aus dem ersten Reaktionsbehälter (21) zugeführten Belebtschlamm enthalten sind, in dem Inaktivierungsbehälter (23) unter Verwendung von Nitritstickstoff, der in dem aus dem zweiten Reaktionsbehälter (61) zugeführten zweiten Filtrat enthalten ist;
Durchführen von partieller Nitrifikationsbehandlung an Ammoniumstickstoff, der in anderem organischen Abwasser enthalten ist, in einem dritten Reaktionsbehälter (81) unter Verwendung von ammoniakoxidierenden Bakterien, die in anderem Belebtschlamm enthalten sind;
Zuführen des organischen Abwassers, aus dem der Belebtschlamm abgetrennt worden ist, von der dritten Fest-Flüssig-Trennvorrichtung (22) zu einem ersten Anammox-Reaktionsbehälter (31);
Zuführen des anderen organischen Abwassers, das der partiellen Nitrifikationsbehandlung unterzogen worden ist, von dem dritten Reaktionsbehälter (81) zu dem ersten Anammox-Reaktionsbehälter (31), wobei eine Verweilzeit des anderen Belebtschlamms in dem dritten Reaktionsbehälter (81) so gesteuert wird, dass sie kürzer ist als eine Verweilzeit des Belebtschlamms in dem ersten Reaktionsbehälter (21), wobei die Verweilzeit auf einen Zeitraum beschränkt ist, der nicht länger ist als ein Zeitraum, in dem in dem anderen organischen Abwasser enthaltener Ammoniak nicht zu Nitrit oxidiert wird, und Durchführung von Anammox-Behandlung in dem ersten Anammox-Reaktionsbehälter (31) an Ammoniumstickstoff und Nitritstickstoff, die in einem Gemisch des organischen Abwassers, das aus der dritten Fest-Flüssig-Trennvorrichtung (22) zugeführt wird, und dem anderen organischen Abwasser, das aus dem dritten Reaktionsbehälter (81) zugeführt wird, enthalten sind.

2. Biologisches Behandlungsverfahren nach Anspruch 1, ferner umfassend:
Zuführen des von der zweiten Fest-Flüssig-Trennvorrichtung (25) abgetrennten ersten Filtrats zu wenigstens einem von dem ersten Anammox-Reaktionsbehälter (31) und einem zweiten Anammox-Reaktionsbehälter (71); und
Durchführung von Anammox-Behandlung in dem zweiten Anammox-Reaktionsbehälter (71) unter Verwendung von Anammox-Bakterien an Ammoniumstickstoff und Nitritstickstoff, die in wenigstens einem von dem zweiten Filtrat, das aus dem zweiten Reaktionsbehälter (61) zugeführt wird, und dem ersten Filtrat, das von der zweiten Fest-Flüssig-Trennvorrichtung (25) zugeführt wird, enthalten sind.

3. Bologisches Behandlungssystem (100) zur biologischen Behandlung von Stickstoffkomponenten, die in organischem Abwasser enthalten sind, wobei das System (100) umfasst:
einen Fest-Flüssig-Trennbehälter (10), der durch eine Leitung (L1) mit einer Abwasserquelle verbunden ist, wobei der Fest-Flüssig-Trennbehälter (10) in dem Abwasser enthaltene Schadstoffe abtrennt und die Schadstoffe als Primärschlamm durch eine Leitung (L2) und das Abwasser, aus dem die Schadstoffe abgetrennt worden sind, durch eine Leitung (L3) und eine Leitung (L21) ableitet;
einen ersten Reaktionsbehälter (21), der durch die Leitung (L3) mit dem Fest-Flüssig-Trennbehälter (10) verbunden ist und in dem partielle Nitrifikationsbehandlung an Ammoniumstickstoff, der in dem organischen Abwasser enthalten ist, unter Verwendung von ammoniakoxidierenden Bakterien, die in Belebtschlamm enthalten sind, durchgeführt wird;
einen Inaktivierungsbehälter (23), in dem nitritoxidierende Bakterien, die in dem Belebtschlamm enthalten sind, der aus dem ersten Reaktionsbehälter (21) zugeführt wird, durch Nitritstickstoff inaktiviert werden, unter Halten des pH-Werts auf einem etwa neutralen Wert oder darunter;
eine erste Fest-Flüssig-Trennvorrichtung (24), die mit dem ersten Reaktionsbehälter (21) durch eine Leitung (L31) und mit dem Inaktivierungsbehälter (23) durch eine Leitung (L33) verbunden ist, wobei in der ersten Fest-Flüssig-Trennvorrichtung (24) der Belebtschlamm vor Zuführen zu dem Inaktivierungsbehälter (23) in ersten Feststoff und Filtrat getrennt wird;
eine zweite Fest-Flüssig-Trennvorrichtung (25), die mit dem Inaktivierungsbehälter (23) durch eine Leitung (L34) und mit dem ersten Reaktionsbehälter (21) durch eine Leitung (L36) verbunden ist, wobei in der der zweiten Fest-Flüssig-Trennvorrichtung (25) der aus dem Inaktivierungsbehälter (23) zugeführte Belebtschlamm in zweiten Feststoff, der dem ersten Reaktionsbehälter (21) zugeführt wird, und erstes Filtrat getrennt wird;
eine dritte Fest-Flüssig-Trennvorrichtung (22), die mit dem ersten Reaktionsbehälter (21) durch eine Leitung (L4) verbunden ist, wobei in der dritten Fest-Flüssig-Trennvorrichtung (22) der in dem ersten Reaktionsbehälter (21) verbliebene und in dem durch die Leitung (L4) aus dem ersten Reaktionsbehälter (21) abgeleiteten Abwasser enthaltene Belebtschlamm als überschüssiger Schlamm abgetrennt wird;
einen Faulbehälter (41), in dem wenigstens Primärschlamm oder der durch eine Leitung (L11) zugeführte überschüssige Schlamm gefault wird;
eine vierte Fest-Flüssig-Trennvorrichtung (50), in der wenigstens der gefaulte Primärschlamm oder der gefaulte überschüssige Schlamm in Feststoff und zweites Filtrat getrennt wird;
einen zweiten Reaktionsbehälter (61), zu dem das zweite Filtrat aus der vierten Fest-Flüssig-Trennvorrichtung (50) durch eine Leitung (L13) zugeführt wird und in dem partielle Nitrifikationsbehandlung an Ammoniumstickstoff, der in dem von der vierten Fest-Flüssig-Trennvorrichtung (50) zugeführten zweiten Filtrat enthalten ist, unter Verwendung von ammoniakoxidierenden Bakterien durchgeführt wird, wobei der zweite Reaktionsbehälter (61) durch eine Leitung (L14) zur Zuführung des zweiten Filtrats, das der partiellen Nitrifikationsbehandlung unterzogen worden ist, von dem zweiten Reaktionsbehälter (61) zu dem Inaktivierungsbehälter (23) mit dem Inaktivierungsbehälter (23) verbunden ist;
einen dritten Reaktionsbehälter (81), in dem partielle Nitrifikationsbehandlung an Ammoniumstickstoff durchgeführt wird, der in dem über die Leitung (L21) aus dem Fest-Flüssig-Trennbehälter (10) abgeleiteten Abwasser enthalten ist, unter Verwendung von ammoniakoxidierenden Bakterien, die in anderem Belebtschlamm enthalten sind;
einen Fest-Flüssig-Trennbehälter (82), mit dem der dritte Reaktionsbehälter (81) durch eine Leitung (L23) verbunden ist, um das der partiellen Nitrifizierung unterzogene Abwasser in den Fest-Flüssig-Trennbehälter (82) abzuleiten, und wobei in dem Fest-Flüssig-Trennbehälter (82) Belebtschlamm, der in dem aus dem dritten Reaktionsbehälter (81) abgeleiteten Abwasser enthalten ist, abgetrennt wird;
einen ersten Anammox-Reaktionsbehälter (31), zu dem das organische Abwasser, von dem der Belebtschlamm abgetrennt worden ist, von der dritten Fest-Flüssig-Trennvorrichtung (22) durch eine Leitung (L9) zugeführt wird und zu dem das andere organische Abwasser, das in dem dritten Reaktionsbehälter (81) partieller Nitrifikationsbehandlung unterzogen worden ist und von dem der Belebtschlamm in dem Fest-Flüssig-Trennbehälter (82) abgetrennt worden ist, durch eine Leitung (L22) zugeführt wird, wobei in dem erste Anammox-Reaktionsbehälter (31) Anammox-Behandlung an Ammoniumstickstoff und Nitritstickstoff durchgeführt wird, die in einem Gemisch des organischen Abwassers, das aus der dritten Fest-Flüssig-Trennvorrichtung (22) zugeführt wird, und des anderen organischen Abwassers, das aus dem dritten Reaktionsbehälter (81) zugeführt wird, enthalten ist; und
einen zweiten Anammox-Reaktionsbehälter (71), der mit dem zweiten Reaktionsbehälter (61) durch eine Leitung (L15) verbunden ist, wobei in dem zweiten Anammox-Reaktionsbehälter (71) Anammox-Behandlung an Ammoniumnitrit durchgeführt wird, das in dem zweiten Filtrat enthalten ist, das in dem zweiten Reaktionsbehälter (61) partieller Nitrifikation unterzogen worden ist.

## Revendications

1. Procédé de traitement biologique pour le traitement biologique de composants azotés contenus dans des eaux usées organiques, le procédé comprenant :
effectuer, dans un premier réservoir de réaction (21), un traitement de nitrification partielle sur l'azote ammoniacal contenu dans les eaux usées organiques à l'aide de bactéries oxydant l'ammoniac contenues dans les boues activées ;
amener les boues activées du premier réservoir de réaction (21) à un réservoir d'inactivation (23) ;
inactiver, dans le réservoir d'inactivation (23), des bactéries oxydant les nitrites contenues dans les boues activées fournies par le premier réservoir de réaction (21) à l'aide d'azote de nitrite tout en maintenant le pH à un niveau approximativement neutre ou inférieur ;
fournir une boue inactivée au premier réservoir de réaction (21) ;
dans un premier dispositif de séparation solide-liquide (24), séparer les boues activées avant de les fournir au réservoir d'inactivation (23) en une première matière solide et un filtrat ;
fournir la première matière solide du premier dispositif de séparation solide-liquide (24) au réservoir d'inactivation (23) ;
dans un deuxième dispositif de séparation solide-liquide (25), séparer les boues activées fournies par le réservoir d'inactivation (23) en une seconde matière solide et un premier filtrat ;
fournir la seconde matière solide au premier réservoir de réaction (21) ;
dans un troisième dispositif de séparation solide-liquide (22), séparer, en tant que boues excédentaires, les boues activées retenues dans le premier réservoir de réaction (21) ;
digérer au moins des boues primaires ou des boues excédentaires dans un réservoir de digestion (41) ;
dans un quatrième dispositif de séparation solide-liquide (50), séparer au moins les boues primaires digérées ou les boues excédentaires digérées en une matière solide et un second filtrat ;
fournir le second filtrat du quatrième dispositif de séparation solide-liquide (50) à un deuxième réservoir de réaction (61) ;
dans le deuxième réservoir de réaction (61), effectuer un traitement de nitrification partielle sur l'azote ammoniacal contenu dans le second filtrat fourni par le quatrième dispositif de séparation solide-liquide (50), à l'aide de bactéries oxydant l'ammoniac ;
fournir le second filtrat, qui a été soumis au traitement de nitrification partielle, du deuxième réservoir de réaction (61) au réservoir d'inactivation (23) ;
inactiver, dans le réservoir d'inactivation (23), des bactéries oxydant les nitrites contenues dans les boues activées fournies par le premier réservoir de réaction (21), à l'aide d'azote de nitrite contenu dans le second filtrat fourni par le deuxième réservoir de réaction (61) ;
effectuer, dans un troisième réservoir de réaction (81), un traitement de nitrification partielle sur l'azote ammoniacal contenu dans d'autres eaux usées organiques à l'aide de bactéries oxydant l'ammoniac contenues dans d'autres boues activées ;
fournir les eaux usées organiques, dont les boues activées ont été séparées, du troisième dispositif de séparation solide-liquide (22) à un premier réservoir de réaction anammox (31) ;
fournir des autres eaux usées organiques, qui ont été soumises au traitement de nitrification partielle du troisième réservoir de réaction (81) au premier réservoir de réaction anammox (31), un temps de rétention des autres boues activées dans le troisième réservoir de réaction (81) étant régulé de manière à être plus court qu'un temps de rétention des boues activées dans le premier réservoir de réaction (21), où le temps de rétention est régulé de manière à être une période ne dépassant pas une période pendant laquelle l'ammoniac contenu dans les autres eaux usées organiques n'est pas oxydé en nitrite ; et
effectuer, dans le premier réservoir de réaction anammox (31), un traitement anammox sur l'azote ammoniacal et l'azote de nitrite contenus dans un mélange d'eaux usées organiques fournies par le troisième dispositif de séparation solide-liquide (22) et les autres eaux usées organiques fournies par le troisième réservoir de réaction (81).

2. Procédé de traitement biologique selon la revendication 1, comprenant en outre :
fournir le premier filtrat séparé par le deuxième dispositif de séparation solide-liquide (25) à au moins un parmi le premier réservoir de réaction anammox (31) et le second réservoir de réaction anammox (71) ; et
effectuer, dans le second réservoir de réaction anammox (71), un traitement anammox à l'aide de bactéries anammox sur l'azote ammoniacal et l'azote de nitrite contenus dans au moins le second filtrat fourni par le deuxième réservoir de réaction (61) et le premier filtrat fourni par le deuxième dispositif de séparation solide-liquide (25).

3. Système de traitement biologique (100) destiné au traitement biologique de composants azotés contenus dans des eaux usées organiques, le système (100) comprenant :
un réservoir de séparation solide-liquide (10) relié à une source d'eaux usées par une conduite (L1), lequel réservoir de séparation solide-liquide (10) sépare des polluants contenus dans les eaux usées et rejette les polluants sous forme de boues primaires par une conduite (L2) et les eaux usées dont les polluants ont été séparés par une conduite (L3) et une conduite (L21) ;
un premier réservoir de réaction (21) relié par la conduite (L3) au réservoir de séparation solide-liquide (10) et dans lequel on effectue un traitement de nitrification partielle sur l'azote ammoniacal contenu dans les eaux usées organiques à l'aide de bactéries oxydant l'ammoniac contenues dans les boues activées ;
un réservoir d'inactivation (23) dans lequel les bactéries oxydant les nitrites contenues dans les boues activées fournies par le premier réservoir de réaction (21) sont inactivées par de l'azote de nitrite tandis que le pH est maintenu à un niveau approximativement neutre ou inférieur ;
un premier dispositif de séparation solide-liquide (24) relié au premier réservoir de réaction (21) par une conduite (L31) et au réservoir d'inactivation (23) par une conduite (L33), dans lequel premier dispositif de séparation solide-liquide (24) les boues activées sont séparées avant de les fournir au réservoir d'inactivation (23) en une première matière solide et un filtrat ;
un deuxième dispositif de séparation solide-liquide (25) relié au réservoir d'inactivation (23) par une conduite (L34) et au premier réservoir de réaction (21) par une conduite (L36), dans lequel deuxième dispositif de séparation solide-liquide (25) les boues activées fournies par le réservoir d'inactivation (23) sont séparées en une seconde matière solide, qui est fournie au premier réservoir de réaction (21), et un premier filtrat ;
un troisième dispositif de séparation solide-liquide (22) relié au premier réservoir de réaction (21) par une conduite (L4), dans lequel troisième dispositif de séparation solide-liquide (22), les boues activées retenues dans le premier réservoir de réaction (21) et contenues dans les eaux usées évacuées du premier réservoir de réaction (21) par la conduite (L4) sont séparées comme boues excédentaires ;
un réservoir de digestion (41), dans lequel au moins les boues primaires ou les boues excédentaires alimentées par une conduite (L11) sont digérées ;
un quatrième dispositif de séparation solide-liquide (50), dans lequel au moins les boues primaires digérées ou les boues excédentaires digérées sont séparées en une matière solide et un second filtrat ;
un deuxième réservoir de réaction (61) auquel est fourni le second filtrat du quatrième dispositif de séparation solide-liquide (50) par une conduite (L13) et dans lequel est effectué un traitement de nitrification partielle sur l'azote ammoniacal contenu dans le second filtrat fourni par le quatrième dispositif de séparation solide-liquide (50), à l'aide de bactéries oxydant l'ammoniac, le deuxième réservoir de réaction (61) étant relié au réservoir d'inactivation (23) par une conduite (L14) pour fournir le second filtrat, qui a été soumis au traitement de nitrification partielle, du deuxième réservoir de réaction (61) au réservoir d'inactivation (23) ;
un troisième réservoir de réaction (81), dans lequel est effectué un traitement de nitrification partielle sur l'azote ammoniacal contenu dans les eaux usées évacuées du réservoir de séparation solide-liquide (10) par la conduite (L21) à l'aide de bactéries oxydant l'ammoniac contenues dans d'autres boues activées ;
un réservoir de séparation solide-liquide (82), auquel le troisième réservoir de réaction (81) est relié par une conduite (L23) d'évacuation des eaux usées soumises au traitement de nitrification partielle vers le réservoir de séparation solide-liquide (82) et dans lequel on sépare les boues activées du réservoir de séparation solide-liquide (82) contenues dans les eaux usées évacuées du troisième réservoir de réaction (81) ;
un premier réservoir de réaction anammox (31), auquel les eaux usées organiques, dont les boues activées ont été séparées, provenant du troisième dispositif de séparation solide-liquide (22) sont fournies par une conduite (L9) et auquel les autres eaux usées organiques, qui ont été soumises au traitement de nitrification partielle dans le troisième réservoir de réaction (81) et dont les boues activées ont été séparées dans le réservoir de séparation solide-liquide (82) sont fournies par une conduite (L22), dans lequel premier réservoir de réaction anammox (31) est effectué un traitement anammox sur l'azote ammoniacal et l'azote nitrite contenus dans un mélange des eaux usées organiques fournies par le troisième dispositif de séparation solide-liquide (22) et des autres eaux usées organiques fournies par le troisième réservoir de réaction (81) ; et
un second réservoir de réaction anammox (71) relié au deuxième réservoir de réaction (61) par une conduite (L15), dans lequel le second réservoir de réaction anammox (71) effectue un traitement anammox sur le nitrite d'ammonium contenu dans le second filtrat qui a été soumis à une nitrification partielle dans ledit deuxième réservoir de réaction (61).
